# EUROPEAN PATENT APPLICATION

(11) **EP 4 492 888 A1**
(43) Date of publication of application: **15.01.2025**
(21) Application number: 22930337.5
(22) Date of filing: 11.03.2022
(51) Int. Cl.: H04W 72/00

(54) **UCI REPORTING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); ZHANG, Zhi, Dongguan, Guangdong 523860 (CN)
(74) Representative: RGTH
(86) International application number: PCT/CN2022/080366
(87) International publication number: WO 2023/168699

(57) **Abstract**

Embodiments of the present disclosure provide a UCI reporting method, a terminal device, and a network device. The method includes: determining a first backscattering resource for reporting first uplink control information (UCI); and reporting the first UCI to a network device based on the first backscattering resource. The method provided by the present disclosure can not only avoid a resource conflict between UCI reporting and other channels, but also reduce the transmission delay of UCI.

## Description

### TECHNICAL FIELD

Embodiments of the present disclosure relate to the field of communications, and more particularly, to a UCI reporting method, a terminal device, and a network device.

### BACKGROUND

Currently, a terminal device generally reports uplink control information (Uplink Control Information, UCI) to a network device through a physical uplink channel, such as a physical uplink control channel (Physical Uplink Control Channel, PUCCH) /a physical uplink shared channel (Physical Uplink Shared Channel, PUSCH). However, when the UCI is reported through the physical uplink channel, transmission of a channel corresponding to an index with a lower priority will be affected when the physical uplink channel overlaps in time with the channel corresponding to the index with a lower priority; and sending of the physical uplink channel will be cancelled when the physical uplink channel overlaps in time with a channel corresponding to an index with a higher priority, that is, UCI reporting will be cancelled. In addition, since UCI reporting can only be performed on an uplink resource, for a time division duplexing (Time Division Duplexing, TDD) frame structure having a large proportion of a downlink resource, cancelling the UCI reporting will cause a large transmission delay for the UCI reporting.

Therefore, there is an urgent need in the art for a UCI reporting method, so as to avoid a conflict between UCI reporting and other channels and reduce a transmission delay of UCI.

### SUMMARY

The embodiments of the present disclosure provide a UCI reporting method, a terminal device, and a network device, which can not only avoid a resource conflict between UCI reporting and other channels, but also reduce a transmission delay of the UCI.

In a first aspect, the present disclosure provides a UCI reporting method, including:
determining a first backscattering resource for reporting first uplink control information (UCI); and
reporting the first UCI to a network device based on the first backscattering resource.

In a second aspect, the present disclosure provides a UCI reporting method, including:
determining a first backscattering resource for reporting first uplink control information (UCI); and
receiving the first UCI reported by a terminal device based on the first backscattering resource.

In a third aspect, the present disclosure provides a terminal device for performing the methods in the above-mentioned first aspect or respective implementations thereof. Specifically, the terminal device includes a functional module for performing the methods in the above-mentioned first aspect or the respective implementations thereof.

In an implementation, the terminal device may include a processing unit, where the processing unit is configured to perform a function related to information processing. For example, the processing unit may be a processor.

In an implementation, the terminal device may include a sending unit and/or a receiving unit. The sending unit is configured to perform a function related to sending, and the receiving unit is configured to perform a function related to receiving. For example, the sending unit may be a transmitter or a sender, and the receiving unit may be a receiver or an acceptor. For another example, the terminal device is a communication chip, the sending unit may be an input circuit or an input interface of the communication chip, and the sending unit may be an output circuit or an output interface of the communication chip.

In a fourth aspect, the present disclosure provides a network device for performing the methods in the above-mentioned second aspect or respective implementations thereof. Specifically, the network device includes a functional module for performing the methods in the above-mentioned second aspect or the respective implementations thereof.

In an implementation, the network device may include a processing unit, where the processing unit is configured to perform a function related to information processing. For example, the processing unit may be a processor.

In an implementation, the network device may include a sending unit and/or a receiving unit. The sending unit is configured to perform a function related to sending, and the receiving unit is configured to perform a function related to receiving. For example, the sending unit may be a transmitter or a sender, and the receiving unit may be a receiver or an acceptor. For another example, the network device is a communication chip, the receiving unit may be an input circuit or an input interface of the communication chip, and the sending unit may be an output circuit or an output interface of the communication chip.

In a fifth aspect, the present disclosure provides a terminal device including a processor and a memory. The memory is configured to store a computer program, and the processor is configured to call the computer program stored in the memory and run the computer program to perform methods in the above-mentioned first aspect or respective implementations thereof.

In an implementation, the processor is one or more processors, and the memory is one or more memories.

In an implementation, the memory and the processor may be integrated together, or the memory may be provided separately from the processor.

In an implementation, the terminal device further includes a transmitter (sender) and a receiver (acceptor).

In a sixth aspect, the present disclosure provides a network device. The memory is configured to store a computer program, and the processor is configured to call the computer program stored in the memory and run the computer program to perform methods in the above-mentioned second aspect or respective implementations thereof.

In an implementation, the processor is one or more processors, and the memory is one or more memories.

In an implementation, the memory and the processor may be integrated together, or the memory may be provided separately from the processor.

In an implementation, the network device further includes a transmitter (sender) and a receiver (acceptor).

In a seventh aspect, the present disclosure provides a chip for implementing the methods in any one of the above-mentioned first to second aspects or respective implementations thereof. Specifically, the chip includes: a processor, configured to call a computer program from a memory and run the computer program, so as to enable a device equipped with the chip to perform the methods in any one of the above-mentioned first to second aspects or the respective implementations thereof.

In an eighth aspect, the present disclosure provides a computer-readable storage medium, where the computer-readable storage medium is used to store a computer program, and the computer program enables a processor to perform methods in any one of the above-mentioned first to second aspects or respective implementations thereof.

In a ninth aspect, the present disclosure provides a computer program product including computer program instructions, and the computer program instructions enable a computer to perform the methods in any one of the above-mentioned first to second aspects or respective implementations thereof.

In a tenth aspect, the present disclosure provides a computer program which, upon being executed on a computer, enables the computer to perform the methods in any one of the above-mentioned first to second aspects or respective implementations thereof.

Based on the above technical solutions, a first backscattering resource for reporting first UCI is introduced, and the first UCI is reported to a network device based on the first backscattering resource. On the one hand, since the first backscattering resource may not be restricted by an uplink resource, which is equivalent to that the first backscattering resource may be an uplink resource or a downlink resource for a physical channel, that is, a terminal device may report the first UCI to the network device on the uplink resource or the downlink resource, thereby reducing a transmission delay of the first UCI. On the other hand, when the first UCI is reported based on the first backscattering resource, other channels may be used as carriers for backscattering. Therefore, when the terminal device reports the first UCI based on the first backscattering resource, the first backscattering resource can be better compatible with other channels. For example, even if the first backscattering resource conflicts with other physical uplink channels, the terminal device can still report the first UCI to the network device based on the first backscattering resource, which is equivalent to enabling resource sharing between a transmission resource of the first UCI and other channels, thereby be capable of not only avoiding the problem of canceling of transmission of the first UCI due to resource conflicts between reporting of the first UCI and other channels, but also reducing a transmission delay of the first UCI.

### BRIEF DESCRIPTION OF THE DRAWINGS

FIG. 1 is a schematic diagram of a communication system provided by the embodiments of the present disclosure.
FIG. 2 is a schematic diagram of a zero-power consumption communication system provided by the embodiments of the present disclosure.
FIG. 3 is a principle diagram of power harvesting provided by the embodiments of the present disclosure.
FIG. 4 is a principle diagram of backscattering communication provided by the present disclosure.
FIG. 5 is a circuit principle diagram of resistance load modulation provided by the embodiments of the present disclosure.
FIG. 6 is a schematic diagram of a subcarrier modulation mode provided by the embodiments of the present disclosure.
FIG. 7 is a schematic diagram of an OOK modulation mode provided by the embodiments of the present disclosure.
FIG. 8 is a schematic flow chart of a UCI reporting method provided by the embodiments of the present disclosure.
FIG. 9 is an example of determination of a first backscattering resource based on first indication information provided by the embodiments of the present disclosure.
FIG. 10 is an example of determination of a first backscattering resource for carrying HARQ-ACK based on a position of a PDSCH resource provided by the embodiments of the present disclosure.
FIG. 11 is an example of a first time length provided by the embodiments of the present disclosure.
FIG. 12 is an example of a first configuration resource provided by the embodiments of the present disclosure.
FIG. 13 and FIG. 14 are examples of a first one backscattering resource in candidate backscattering resources after a first moment associated with first UCI used as a first backscattering resource by a terminal device, provided by the embodiments of the present disclosure.
FIG. 15 is another schematic flow diagram of a UCI reporting method provided by the embodiments of the present disclosure.
FIG. 16 is a schematic block diagram of a terminal device provided by the embodiments of the present disclosure.
FIG. 17 is a schematic block diagram of a network device provided by the embodiments of the present disclosure.
FIG. 18 is a schematic block diagram of a communication device provided by the embodiments of the present disclosure.
FIG. 19 is a schematic block diagram of a chip provided by the embodiments of the present disclosure.

### DETAILED DESCRIPTION

The technical solutions in the embodiments of the present disclosure will be described below in combination with the accompanying drawings.

It should be understood that the terms "system" and "network" herein are often used interchangeably herein. The term "and/or" herein is merely to describe an association relationship of associated objects, and represents that there may be three relationships. For example, A and/or B may represent that: A exists alone, A and B exist simultaneously, and B exists alone. In addition, the symbol "/" herein generally represents that a relationship between related objects is "or". The term "corresponding" herein may represent that there is a direct or indirect correspondence between two items, or may also represent that there is an association relationship between the two items, or may also be a relationship of indication and being indicated, configuration and being configured, etc. The term "indication" herein may be a direct indication, may also be an indirect indication, or may further be a representation of an associated relationship. For example, A indicating B may represent that A directly indicates B, e.g., B may be acquired through A; may also represent that A indirectly indicates B, e.g., A indicates C, and B may be acquired through C; or may further represent that there is an association relationship between A and B. The term "pre-configuration" or "preset value" herein may be implemented by pre-saving corresponding codes, tables, or other manners that may be used to indicate related information in a device (e.g., including a terminal device and a network device), a specific implementation of which is not limited in the present disclosure. For example, the pre-configuration may refer to being defined in a protocol. It should also be understood that in the embodiments of the present disclosure, the "protocol" may refer to a standard protocol in the field of communications, for example, the protocol may include an LTE protocol, an NR protocol, and related protocols applied in future communication systems, which is not limited in the present disclosure.

The embodiments of the present disclosure may be applied to various communication systems, for example, a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolution system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (Universal Mobile Telecommunication System, UMTS), a wireless local area network (Wireless Local Area Networks, WLAN), wireless fidelity (Wireless Fidelity, WiFi), a next-generation communication system, a zero-power communication system, a cellular Internet of Things, a cellular passive Internet of Things or other communication systems, etc.

The cellular Internet of Things is a product of development of a combination of a cellular mobile communication network and an Internet of Things. The cellular passive Internet of Things is also referred to as a passive cellular Internet of Things, which is a combination of a network device and a passive terminal. In the cellular passive Internet of Things, the passive terminal may communicate with other passive terminals through the network device, or the passive terminal may perform communication by adopting a device to device (Device to Device, D2D) communication mode, while the network device only needs to send a carrier signal, i.e., a power supply signal, so as to supply power to the passive terminal.

Generally speaking, a number of connections supported by a traditional communication system is limited and is easy to implement. However, with the development of communication technology, a mobile communication system will not only support traditional communication, but also support, for example, D2D communication, machine-to-machine (Machine to Machine, M2M) communication, machine-type communication (Machine Type Communication, MTC), and vehicle-to-vehicle (Vehicle to Vehicle, V2V) communication, etc. The embodiments of the present disclosure may also be applied to these communication systems.

Optionally, the communication system in the embodiments of the present disclosure may be applied to a carrier aggregation (Carrier Aggregation, CA) scenario, or may also be applied to a dual connectivity (Dual Connectivity, DC) scenario, or may further be applied to a standalone (Standalone, SA) networking scenario.

The embodiments of the present disclosure do not limit the applied frequency spectrum. For example, the embodiments of the present disclosure may be applied in an authorized spectrum or may also be applied in an unauthorized spectrum.

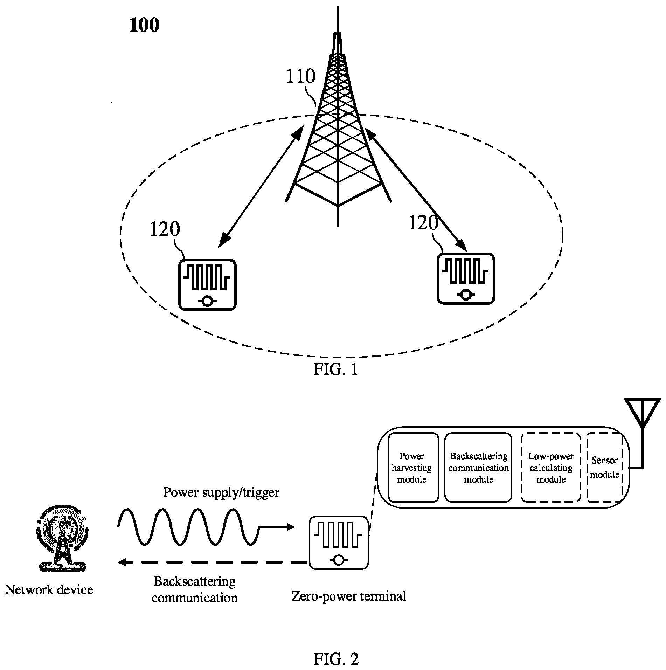

Exemplarily, a communication system 100 applied in the embodiments of the present disclosure is as shown in FIG. 1. The communication system 100 may include a network device 110, and the network device 110 may be a device for communicating with a terminal device 120 (or referred to as a communication terminal or a terminal). The network device 110 may provide communication coverage for a specific geographical area and may communicate with a terminal device located in the coverage area.

FIG. 1 exemplarily shows a network device and two terminal devices. Optionally, the communication system 100 may include a plurality of network devices and other numbers of terminal devices may be included in a coverage range of each network device, which is not limited in the embodiments of the present disclosure.

Optionally, the communication system 100 may further include other network entities, such as a network controller, a mobility management entity, etc., which are not limited in the embodiments of the present disclosure.

It should be understood that a device having a communication function in a network/system in the embodiments of the present disclosure may be referred to as a communication device. Taking the communication system 100 shown in FIG. 1 as an example, the communication device may include the network device 110 and the terminal devices 120 which have communication functions. The network device 110 and the terminal devices 120 may be specific devices described above and will not be repeated herein. The communication device may further include other devices in the communication system 100, for example, other network entities, such as a network controller, a mobile management entity, etc., which are not limited in the embodiments of the present disclosure.

The embodiments of the present disclosure describe respective embodiments in combination with the terminal devices and the network device. The network device may be a device for communicating with a mobile device, and the network device may be an access point (Access Point, AP) in a WLAN and a base transceiver station (Base Transceiver Station, BTS) in a GSM or a CDMA; may also be a base station (NodeB, NB) in a WCDMA; and may further be an evolutional Node B (Evolutional Node B, eNB or eNodeB) in an LTE, or a relay station or an access point, or a vehicle-mounted device, a wearable device, a network device (gNB) in an NR network, or a network device in a future evolved PLMN network, etc.

In the embodiments of the present disclosure, the network device provides a service for a cell, and the terminal device communicates with the network device through a transmission resource (e.g., a frequency domain resource, or a spectrum resource) used by the cell. The cell may be a cell corresponding to the network device (e.g., a base station). The cell may belong to a macro station, or may belong to a base station corresponding to a small cell (Small cell). The small cell herein may include: a metro cell (Metro cell), a micro cell (Micro cell), a pico cell (Pico cell), a femto cell (Femto cell), etc. These small cells have characteristics of a small coverage range and low transmission power, and are applicable to provide a high-rate data transmission service.

In the embodiments of the present disclosure, the terminal device (User Equipment, UE) may also be referred to as a user equipment, an access terminal, a user unit, a user station, a mobile station, a mobile site, a remote station, a remote terminal, a mobile device, a user terminal, a terminal, a wireless communication device, a user agent or a user apparatus, etc. The terminal device may be a station (STAION, ST) in a WLAN; may be a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device with a wireless communication function, a computing device or other processing device connected to a wireless modem, a vehicle-mounted device, a wearable device and, a terminal device in a next-generation communication system (for example, an NR network) or a terminal device in a future evolved public land mobile network (Public Land Mobile Network, PLMN) network; or may be a zero-power consumption device, etc.

As an example but not a limitation, in the embodiments of the present disclosure, the terminal device may further be a wearable device. The wearable device may also be referred as to a wearable smart device and is a generic term for wearable devices by performing an intelligent design and development on daily wear by applying wearable technology, such as glasses, gloves, watches, clothing and shoes, etc. The wearable device is a portable device that is worn directly on a body or integrated into clothing or an accessory of a user. The wearable device is not only a kind of hardware device, but also achieves powerful functions through software support, data interaction, and cloud interaction. In a broad sense, the wearable smart device includes devices that are fully functional, large in size, and can achieve complete or partial functions without relying on a smartphone (such as a smart watch or smart glasses, etc.), and devices that only focus on a certain type of application functions and need to be used in coordination with other devices (e.g., a smartphone), such as various types of smart bracelets, smart jewelry for vital signs monitoring, etc.

It should be understood that a zero-power device may be understood as a device having power consumption lower than a preset power consumption, for example, including a passive terminal and even further including a semi-passive terminal, etc.

Exemplarily, a zero-power device is a radio frequency identification (Radio Frequency Identification, RFID) tag, which is a technology that uses a manner of spatial coupling of a radio frequency signal to achieve contactless automatic transmission and identification of tag information. The RFID tag is also referred to as a "radio frequency tag" or an "electronic tag". According to a type of electronic tag classified by different power supply modes, electronic tags may be classified into an active electronic tag, a passive electronic tag and a semi-passive electronic tag. The active electronic tag, also referred to as an initiative electronic tag, refers to an electronic tag, of which power for working is provided by a battery, and the battery, an internal storage and an antenna together constitute the active electronic tag. Different from an activating mode of passive radio frequency, the active electronic tag sends information through a set frequency band until the battery is replaced. The passive electronic tag, also referred to as an inactive electronic tag, does not support a built-in battery. When the passive electronic tag is approaching a reader/writer, the tag is within a near-field range formed by radiation of an antenna of the reader/writer and the antenna of the electronic tag generates an induced current through electromagnetic induction. The induced current drives a chip circuitry of the electronic tag. The chip circuitry sends identification information stored in the tag to the reader/writer through the antenna of the electronic tag. The semi-passive electronic tag, also referred to as a semi-active electronic tag, inherits advantages of the passive electronic tag, such as small size, light weight, low price and long service life. A built-in battery of the semi-passive electronic tag only supplies power for a small number of circuits in the chip when there is no access from the reader/writer; and only when the reader/writer performs access, the built-in battery supplies power to the chip of the RFID, so as to increase a reading and writing distance of the tag and improve the reliability of communication.

An RFID system is a wireless communication system. The RFID system includes two parts: an electronic tag (TAG) and a reader/writer (Reader/Writer). The electronic tag includes a coupling component and a chip. Each electronic tag has a unique electronic code and is placed on a to-be-measured target to achieve the purpose of marking a target object. The reader/writer can not only read information on the electronic tag, but also write the information on the electronic tag, and meanwhile provides power for the electronic tag required for communication.

Zero-power communication adopts power harvesting and backscattering communication technology. To facilitate understanding of the technical solutions of the embodiments of the present disclosure, the related technologies of zero-power are explained.

FIG. 2 is a schematic diagram of a zero-power communication system provided by the present disclosure.

As shown in FIG. 2, the zero-power communication system includes a network device and a zero-power terminal. The network device is configured to send a wireless power supply signal and a downlink communication signal to the zero-power terminal, and receives a backscattered signal from the zero-power terminal. A basic zero-power terminal includes a power harvesting module, a backscattering communication module, and a low-power calculating module. In addition, the zero-power terminal may also have a memory or a sensor for storing some basic information (e.g., an object identifier, etc.) or acquiring sensing data, such as ambient temperature, ambient humidity, etc.

The zero-power communication may also be referred to as communication based on a zero-power terminal. Key technologies of the zero-power communication mainly include radio frequency power harvesting and backscattering communication.

### 1. Power Harvesting (RF Power Harvesting).

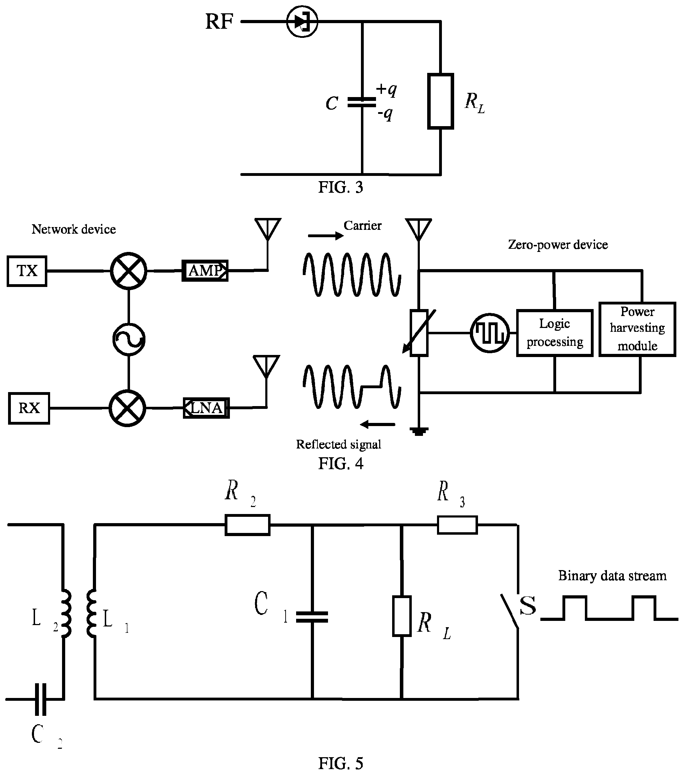

FIG. 3 is a principle diagram of power harvesting provided by the embodiments of the present disclosure.

As shown in FIG. 3, the power harvesting module may include a capacitor C and a resistor R_{L}. The power harvesting module realizes harvesting of electromagnetic wave energy in space based on the principle of electromagnetic induction, and then acquires power required to drive the zero-power terminal to operate, for example, for driving a low-power demodulation and modulation module, a sensor, and memory reading. Therefore, the zero-power terminal does not require a traditional battery. The principle of electromagnetic induction refers to that: as long as a magnetic flux passing through a closed circuit changes, an induced current will be generated in the closed circuit. In combination with the present disclosure, the capacitor C and the resistor R_{L} may be used to form a closed circuit. After the radio frequency power harvesting module receives a radio frequency (RF), the radio frequency power harvesting module may generate an induced current and store the generated induced current in the capacitor C to realize harvesting of electromagnetic wave energy in space.

### 2. Backscattering communication (Back Scattering)

FIG. 4 is a principle diagram of backscattering communication provided by the present disclosure.

As shown in FIG. 4, when the network device acts as a transmitting end (TX), the network device sends a carrier to a zero-power device through an amplifier (AMP). Correspondingly, after the zero-power device receives the carrier sent by the network, the zero-power device uses the power harvested by the power harvesting module to drive a logic processing module to process information that needs to be sent, loads information that needs to be sent to the received carrier through a variable resistor to obtain a reflected signal, and finally radiates an obtained reflected signal through an antenna. This information transmission process is referred to as backscattering communication. Correspondingly, when the network device acts as a receiving end (RX), the network device may receive a reflected signal sent by the zero-power device through a low-noise amplifier (LNA). Furthermore, in some possible implementations, AMP and LNA each may be connected to a voltage display light, and an emergency light may be provided between voltage display lights respectively connected to AMP and LNA.

It should be noted that the principle of the backscattering communication shown in FIG. 4 is explained by the zero-power device and the network device. In fact, any device with a backscattering communication function may implement backscattering communication.

The backscattering communication and a load modulation function are inseparable from each other. A load modulation changes a size and a phase of an impedance of the zero-power device by adjusting and controlling a circuit parameter of an oscillation loop of the zero-power terminal according to a beat of a data stream, thereby completing a process of modulation. A load modulation technology mainly includes two modes: resistive load modulation and capacitive load modulation.

FIG. 5 is a circuit principle diagram of resistive load modulation provided by the embodiments of the present disclosure.

As shown in FIG. 5, in resistive load modulation, a resistor R_{L} is connected in parallel with a resistor R₃. The resistor R_{L} may be referred to as a load modulation resistor. A branch where the resistor R_{L} and the resistor R₃ are located is turned on or off based on the control of a switch S. The switch S may be controlled by a binary data stream. On and off of the branch where the resistor R_{L} and the resistor R₃ are located will cause a change of a voltage of the circuit. Furthermore, the resistor R_{L} may be connected in parallel with an inductor Li through a resistor R₂, and the inductor Li and an inductor L₂ are used to form a resonant circuit. Based on this, the on and off of the branch where the R_{L} and the resistor R₃ are located will cause the change of the voltage of the circuit, and then will cause a change of a resonant frequency of the resonant circuit; and finally, amplitude shift keying modulation (ASK) is realized, that is, modulation and transmission of a signal is realized by adjusting a size of an amplitude of a backscattered signal of the zero-power terminal. Further, the inductor L₂ may also be used to connect to a capacitor C₂, and the capacitor C₂ may be used to convert the change of the resonant frequency of the resonant circuit into a signal for the antenna to transmit. Similarly, in capacitive load modulation, a change of a resonant frequency of the resonant circuit may be realized by on and off of a branch where the capacitor C₁ and the resistor R₃ are located, and a frequency shift keying (FSK) is realized, that is, modulation and transmission of a signal are realized by adjusting a working frequency of a backscattered signal of the zero-power terminal.

Since the zero-power terminal performs information modulation on an incoming signal by means of a load modulation mode, the backscattering communication process is therefore realized. Therefore, the zero-power terminal has significant advantages as follows.
1. The terminal device does not actively transmit a signal, and realizes backscattering communication by modulating an incoming signal.
2. The terminal device does not rely on a traditional active power amplifier transmitter and uses a low-power computing unit at the same time, thereby greatly reducing complexity of hardware.
3. Battery-free communication can be achieved in combination with power harvesting.

It should be understood that the above-mentioned terminal device may be a zero-power device (e.g., a passive terminal or even a semi-passive terminal), and even the terminal device may be a non-zero-power device, such as an ordinary terminal, but the ordinary terminal may perform backscattering communication in some cases.

In a specific implementation, data transmitted by the terminal device may use different forms of codes to represent binary "1" and "0". The radio frequency identification system generally uses one of the following encoding methods: reverse non-return-to-zero (NRZ) encoding, Manchester (Manchester) encoding, unipolar return-to-zero (Unipolar RZ) encoding, differential bi-phase (DBP) encoding, Miller (Miller) encoding, and differential encoding. Generally speaking, different pulse signals are used to represent 0 and 1.

Exemplarily, zero-power terminals may be classified into the following types based on a power source and usage manner of a zero-power terminal.

### 1. Passive Zero-Power Terminal

The zero-power terminal does not need a built-in battery. When the zero-power terminal approaches a network device (e.g., a reader/writer in an RFID system), the zero-power terminal is within a near-field range formed by radiation of an antenna of the network device. Therefore, an antenna of the zero-power terminal generates an induced current through electromagnetic induction, and the induced current drives a low-power chip circuitry of the zero-power terminal. Works, such as demodulation of a forward link signal and modulation of a reverse link signal, etc., are achieved. For a backscattering link, the zero-power terminal uses a backscattering implementation to transmit a signal.

It can be seen that the passive zero-power terminal does not need a built-in battery to drive either the forward link or the reverse link, and is a true zero-power terminal. The passive zero-power terminal does not need a battery, and has very a simple radio frequency circuit and a simple baseband circuit, for example, a means, such as a low-noise amplifier (LNA), a power amplifier (PA), a crystal oscillator, an analog-to-digital converter (ADC), etc., is not needed. Therefore, the passive zero-power terminal has many advantages, such as a small size, a light weight, very low price, and long service life, etc.

### 2. Semi-Passive Zero-Power Terminal

The semi-passive zero-power terminal itself is not installed with a conventional battery, but may use an RF power harvesting module to harvest radio wave energy and store harvested power in a power storage unit (e.g., a capacitor) at the same time. After the power storage unit obtains power, the obtained power may drive a low-power chip circuitry of the zero-power terminal. Works, such as demodulation of a forward link signal and modulation of a reverse link signal, etc., are achieved. For a backscattering link, the zero-power terminal uses a backscattering implementation to transmit a signal.

It can be seen that the semi-passive zero-power terminal does not need a built-in battery to drive either the forward link or the reverse link. Although the power stored in the capacitor is used during the working of the semi-passive zero-power terminal, the power comes from the radio energy harvested by the power harvesting module. Therefore, the semi-passive zero-power terminal is also a true zero-power terminal. The semi-passive zero-power terminal inherits many advantages of the passive zero-power terminal, thereby having many advantages, such as a small size, a light weight, very low price and long service life, etc.

### 3. Active Zero-power terminal

The zero-power terminal used in some scenarios may also be an active zero-power terminal, and such type of terminals may have a built-in battery. The battery is used to drive a low-power chip circuitry of the zero-power terminal. Works, such as demodulation of a forward link signal and modulation of a reverse link signal, etc., are achieved. However, for a backscattering link, the zero-power terminal uses a backscattering implementation to transmit a signal. Therefore, the zero-power consumption of such type of terminals is mainly reflected in the fact that transmission of the reverse link signal does not need the terminal's own power, but uses a backscattering mode. That is, the active zero-power terminal supplies power to an RFID chip through the built-in battery to increase a reading and writing distance of the zero-power terminal and improve reliability of communication. Therefore, the active zero-power terminal may be applied in some scenarios that have a relatively high requirement on aspects, such as a communication distance, a reading delay, etc.

Exemplarily, the zero-power terminal may harvest power based on a power supply signal.

Optionally, in terms of a power supply signal carrier, the power supply signal may be from a base station, a smart phone, a smart gateway, a charging station, a micro base station, etc.

Optionally, in terms of a frequency band, the power supply signal may be a low frequency signal, a medium frequency signal, a high frequency signal, etc.

Optionally, in terms of a waveform, the power supply signal may be a sine wave, a square wave, a triangle wave, a pulse, a rectangular wave, etc.

Optionally, the power supply signal may be a continuous wave or a discontinuous wave (i.e., an interruption is allowed for a certain time).

Optionally, the power supply signal may be a certain signal specified in the 3GPP standard, such as SRS (Sounding Reference Signal), PUSCH, PRACH (Physical Random Access Channel), PUCCH, PDCCH (Physical Downlink Control Channel), PDSCH (Physical Downlink Shared Channel), PBCH (Physical Broadcast Channel), etc.

It should be noted that since a carrier signal sent by the above-mentioned network device may also be used to provide power to the zero-power device, the carrier signal may also be referred to as a power supply signal.

Exemplarily, the zero-power terminal may perform backscattering communication based on a received trigger signal.

Optionally, the trigger signal may be used to schedule or trigger backscattering communication of the zero-power terminal.

Optionally, the trigger signal carries scheduling information of the network device, or the trigger signal is a scheduling signaling or a scheduling signal sent from the network device.

Optionally, in terms of a power supply signal carrier, the trigger signal may be from a base station, a smart phone, a smart gateway, etc.

Optionally, in terms of a frequency band, the trigger signal may be a low frequency signal, a medium frequency signal, a high frequency signal, etc.

Optionally, in terms of a waveform, the trigger signal may be a sine wave, a square wave, a triangle wave, a pulse, a rectangular wave, etc.

Optionally, the trigger signal may be a continuous wave or a discontinuous wave (i.e., interruption is allowed for a certain time).

Optionally, the trigger signal may be a certain signal specified in the 3GPP standard, such as SRS, PUSCH, PRACH, PUCCH, PDCCH, PDSCH, PBCH, etc.; and may also be a new signal.

It should be noted that the power supply signal and the trigger signal may be the same signal or two independent signals, which is not specifically limited in the present disclosure.

For example, in a cellular network, since the zero-power device does not have a battery for power supply, the zero-power device needs to be provided power supply signal by the network device, so as to obtain power and then perform a corresponding communication process. A signal for supplying power (i.e., a power supply signal) and a signal for transmitting information (i.e., a trigger signal) may be two signals or a signal. For another example, in RFID technology, the power supply signal and the trigger signal may be a signal. In cellular passive Internet of Things technology, the power supply signal and the trigger signal may be two signals independent from each other. These two signals may not be sent in a same frequency band. For example, the network device continuously or intermittently sends the power supply signal in a certain frequency band, and the zero-power device harvests power, the zero-power device, after obtaining power, may perform corresponding communication process, such as measurement, reception of a channel/a signal, sending of a channel/a signal, etc.

Upon sending a signal, the zero-power device may send a signal on a preset resource, for example, different resources may be used for different user IDs (Identifications) or different user types; and the zero-power device may also send a signal based on scheduling of the network device, that is, the zero-power device receives a trigger signal and sends a signal based on the scheduling of the trigger signal.

Since the zero-power device cannot generate a high-frequency signal, a subcarrier modulation mode or an on-off keying (On-Off Keying, OOK) modulation mode is adopted to modulate an encoded baseband coded data stream in the reverse link.

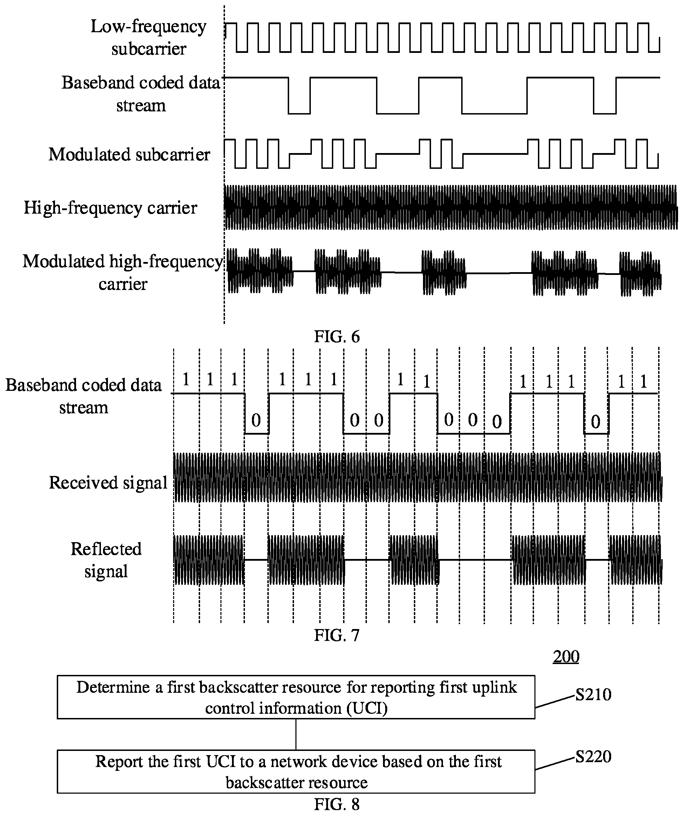

FIG. 6 is a schematic diagram of a subcarrier modulation mode by the embodiments of the present disclosure.

As shown in FIG. 6, for the subcarrier modulation mode, the zero-power device first generates a low-frequency subcarrier; then modulates an encoded baseband coded data stream on the low-frequency subcarrier to obtain a modulated subcarrier; and thereafter, modulates the modulated subcarrier on a high-frequency carrier through a load modulation mode to obtain a modulated high-frequency subcarrier.

FIG. 7 is a schematic diagram of an OOK modulation mode provided by the embodiments of the present disclosure;

As shown in FIG. 7, for the OOK modulation mode, the zero-power device modulates an encoded baseband coded data stream on a signal received by the zero-power device to obtain a reflected signal, and sends the transmission signal to the network device. The signal received by the zero-power device may be a high-frequency signal or a specific carrier signal.

With the increase in application demand in the 5G industry, types of connected objects and application scenarios are increasing, the requirement on price and power consumption of a communication terminal is higher, and the application of a battery-free, low-cost passive Internet of Things device has become a key technology for cellular Internet of Things. The passive Internet of Things device can enrich the types and number of terminals in the network and further truly realize the interconnection of everything. The passive Internet of Things device may be based on an existing zero-power device, such as radio frequency identification (Radio Frequency Identification, RFID) technology, and extended on this basis, to be applicable to the cellular Internet of Things.

The following describes a reporting solution for uplink control information (Uplink Control Information, UCI) based on a physical uplink channel.

A terminal device may report UCI to a network device through a physical uplink channel. For example, the terminal device may report UCI to the network device through a physical uplink control channel (Physical Uplink Control Channel, PUCCH) or a physical uplink shared channel (Physical Uplink Shared Channel, PUSCH).

As an example, when the terminal device reports UCI through PUCCH, UCI may include at least one of: hybrid automatic repeat request acknowledgement (Hybrid Automatic Repeat Request-ACK, HARQ-ACK) information, HARQ non-acknowledgement (NACK) information, radio resource control (Radio Resource Control, RRC) reconfiguration signaling, scheduling request (Scheduling Request, SR), link recovery request (link recovery request, LRR), and channel state information (Channel State Information, CSI). Optionally, the network device may configure at most 4 PUCCH resource sets for the terminal device through a high-level signaling, where a resource set 0 is used to carry UCI of 1-2 bits, a load of a resource set 1 and a load of a resource set 2 may be configured through a high-level signaling, and a maximum load of a resource set 3 is 1706, which is a value from a limitation of Polar encoding. For the PUCCH set 0 (used to carry the UCI of 1-2 bits), the high-level signaling may be used to configure at most 32 PUCCH resources; when a number of PUCCH resources is not more than 8, the PUCCH resource to be used is determined directly according to an indication in DCI; and when a number of PUCCH resources is more than 8, the PUCCH resource to be used is determined according to an index of a control channel element (Control Channel Element, CCE) and 3-bit indication information in the downlink control information (Downlink Control Information, DCI). For the PUCCH set 1, the PUCCH set 2, and the PUCCH set 3 (carrying more than the UCI with 2 bits), the high-level signaling may be used to configure at most 8 PUCCH resources, and the terminal device may determine the PUCCH resource to be used according to the 3-bit indication information in the DCI.

As another example, when the terminal device reports UCI through PUSCH, the network device may determine, for UCI, an offset value for determining a transmission resource of UCI, and indicate a determined offset value to the terminal device through a DCI format or higher-layer signaling for scheduling PUSCH transmission. Optionally, in a PUSCH, the terminal device may send UCI, such as HARQ-ACK information and/or CSI, to the network device by adopting a multiplexing mode.

However, in a case where UCI is reported through the physical uplink channel: when the physical uplink channel overlaps in time with a channel corresponding to an index with a lower priority, transmission of the channel corresponding to the index with the lower priority is affected; and when the physical uplink channel overlaps in time with the channel corresponding to an index with a higher priority, sending of the physical uplink channel will be canceled, that is, reporting of UCI will be canceled. In addition, since reporting of UCI can only be performed on an uplink resource, for a frame structure of time division duplexing (Time Division Duplexing, TDD) has a large proportion of a downlink resource, canceling reporting of UCI will cause a large transmission delay in reporting of UCI.

Exemplarily, situations where there is an overlapping of PUCCH and/or PUSCH transmissions having indexes with different priorities include but are not limited to:
case 1: a first PUCCH having an index with a higher priority and a second PUCCH or PUSCH having an index with a lower priority;
case 2: a PUSCH having an index with a higher priority and a PUCCH having an index with a lower priority being configured;
case 3: a first PUCCH having an index with a higher priority used only to respond to a PDSCH reception (without a corresponding PDCCH) and carrying HARQ-ACK information, and any one of: a second PUCCH carrying SR and/or CSI and having an index with a lower priority; a scheduled-free PUSCH having an index with a lower priority; and a PUSCH having an index with a lower priority and carrying SP (Semi-Persistent)-CSI reporting information and without a corresponding PDCCH;
case 4: a PUSCH having an index with a higher priority and SP-CSI reporting information and without a corresponding PDCCH, and a PUCCH having an index with a lower priority and carrying at least one of SR, CSI, and HARQ-ACK information (only in response to PDSCH reception without a corresponding PDCCH); and
case 5: in a same cell, a scheduled-free PUSCH having an index with a higher priority and a scheduled-free PUSCH having an index with a lower priority.

When there is an overlapping in time between two physical uplink channels having indexes with different priorities, the terminal device will process transmission of a physical uplink channel having an index with a lower priority. For example, if a physical uplink channel having an index with a lower priority overlaps in time with a physical uplink channel having an index with a higher priority, the terminal device will cancel the transmission of the physical uplink channel having an index with a lower priority that overlaps with the physical uplink channel having an the index with a higher priority. Further, the terminal device may further cancel transmission of a physical uplink channel having an index with a lower priority before a first symbol overlapping with a physical uplink channel having an index with a higher priority.

Of course, there may be overlapping between PUCCH transmissions (or PUSCH transmissions) and repeated transmissions of PUCCH (or repeated transmissions of PUSCH) with different priorities in time domain.

For example, if transmission of a PUCCH having an index with a higher priority scheduled by a DCI format overlaps in time with transmission of a PUSCH (or repeated transmission of PUCCH) having an index with a lower priority, the terminal device cancels transmission of the PUSCH (or repeated transmission of the PUCCH) that overlaps with the transmission of the PUCCH. Further, the terminal device may further cancel transmission of the PUSCH (or repeated transmission of PUCCH) before a first symbol that overlaps with transmission of the PUCCH. For another example, if transmission of a PUSCH having an index with a higher priority scheduled by a DCI format overlaps in time with repeated transmission of a PUCCH having an index with a lower priority, the terminal device cancels the repeated transmission of the PUCCH that overlaps with the transmission of the PUSCH. Further, the terminal device may cancel repeated transmission of the PUCCH before a first symbol that overlaps with transmission of the PUSCH. For another example, if repeated transmission of a PUCCH (or repeated transmission of a PUSCH) having an index with a lower priority overlaps in time with transmission of the PUCCH (or transmission of a PUSCH) having an index with a higher priority, the terminal device cancels repeated transmission of the PUCCH (or the repeated transmission of the PUSCH) that overlaps with transmission of the PUCCH (or the transmission of the PUSCH) having an index with a higher priority. Further, the terminal device may further cancel repeated transmission of the PUCCH (or repeated transmission of the PUSCH) having an index with a lower priority before a first symbol that overlaps with transmission of the PUCCH (or the transmission of the PUSCH) having an index with a higher priority.

In summary, UCI reporting based on a physical uplink channel, such as UCI reporting based on PUCCH and/or PUSCH, may conflict with other channels, and canceling UCI reporting may generate a large delay in UCI reporting. In view of this, the embodiments of the present disclosure provides a UCI reporting method, a terminal device and a network device, which can avoid a conflict with other channels and reduce a transmission delay.

FIG. 8 is a schematic flow chart of a UCI reporting method 200 provided by the embodiments of the present disclosure. The method 200 may be performed by a terminal device. It should be understood that the terminal device may be a zero-power device or may also be a terminal device that supports a backscattering communication mode, that is, a terminal device that is not required to obtain power through a power harvesting mode, such as a traditional NR terminal loaded or integrated with a backscattering communication module, which is not specifically limited in the present disclosure. For example, the method 200 may be performed by the terminal device 120 as shown in FIG. 1. For another example, the method 200 may be performed by the zero-power device 120.

As shown in FIG. 8, the method 200 may include:
S210, determining, by a terminal device, a first backscattering resource for reporting first uplink control information (UCI); and
S220, reporting, by the terminal device, the first UCI to a network device based on the first backscattering resource.

Exemplarily, the terminal device, after determining the first backscattering resource, reports the first UCI to the network device in a backscattering communication mode based on the first backscattering resource. For example, the terminal device with a backscattering communication capability reports the first UCI to the network device on the first backscattering resource.

In this embodiment, a first backscattering resource for reporting first UCI is introduced, and the first UCI is reported to a network device based on the first backscattering resource. On the one hand, since the first backscattering resource may not be restricted by an uplink resource, which is equivalent to that the first backscattering resource may be an uplink resource or a downlink resource for a physical channel, that is, a terminal device may report the first UCI to the network device on the uplink resource or the downlink resource, thereby reducing a transmission delay of the first UCI. On the other hand, when the first UCI is reported based on the first backscattering resource, other channels may be used as carriers for backscattering. Therefore, when the terminal device reports the first UCI based on the first backscattering resource, the first backscattering resource can be better compatible with other channels. For example, even if the first backscattering resource conflicts with other physical uplink channels, the terminal device can still report the first UCI to the network device based on the first backscattering resource, which is equivalent to enabling resource sharing between a transmission resource of the first UCI and other channels, thereby be capable of not only avoiding the problem of canceling of transmission of the first UCI due to resource conflicts between reporting of the first UCI and other channels, but also reducing a transmission delay of the first UCI.

In some embodiments, the method 200 may further include:
receiving, by the terminal device, first indication information sent from the network device, where the first indication information is used to indicate the first backscattering resource.

Exemplarily, the terminal device determines the first backscattering resource through the first indication information sent from the network device.

In some embodiments, the first indication information is used to indicate at least one of: a starting time of the first backscattering resource, a duration of the first backscattering resource, and a frequency domain position of the first backscattering resource.

Exemplarily, the first indication information includes at least one field, and information carried by the at least one field is used to indicate the starting time of the first backscattering resource and/or the duration of the first backscattering resource.

In some embodiments, the first indication information indicates, through a first resource configuration index, at least one of: a starting time of the first backscattering resource, a duration of the first backscattering resource, and a frequency domain position of the first backscattering resource.

Exemplarily, the first indication information includes at least one field, and information carried by a first field in the at least one field is used to indicate a starting time of the first backscattering resource and to indicate a duration of the first backscattering resource. For example, the first field is used to carry the first resource configuration index.

Exemplarily, the terminal device may determine a starting position corresponding to the first resource configuration index as the starting time of the first backscattering resource; the terminal device may determine a duration corresponding to the first resource configuration index as the duration of the first backscattering resource; and the terminal device may determine a frequency domain position corresponding to the first resource configuration index as the frequency domain position of the first backscattering resource.

Exemplarily, the frequency domain position of the first backscattering resource includes but is not limited to: a frequency domain starting position of the first backscattering resource, a frequency domain ending position of the first backscattering resource, a frequency point position of the first backscattering resource, etc. For example, the frequency domain position of the first backscattering resource may only include a frequency point where the first backscattering resource is located. For another example, the first backscattering resource may include a frequency domain starting position and a frequency domain ending position of the first backscattering resource. It should be understood that the frequency domain starting position and the frequency domain ending position of the first backscattering resource may also be replaced by a frequency band where the first backscattering resource is located. Similarly, the starting time of the first backscattering resource and the duration of the first backscattering resource may be replaced by a time period in which the first backscattering resource is located, and of course, may also be replaced by a starting time of the first backscattering resource and an ending time of the first backscattering resource, which is not specifically limited in the present disclosure.

In some embodiments, the method 200 may further include:
receiving, by the terminal device, first resource configuration information sent from the network device;
where the first resource configuration information includes at least one of: a correspondence between at least one resource configuration index and at least one starting time, a correspondence between the at least one resource configuration index and at least one duration, and a correspondence between the at least one resource configuration index and at least one frequency domain position. The at least one resource configuration index includes the first resource configuration index.

Exemplarily, the first resource configuration information may be table information or information in other formats. For example, the first resource configuration information may also be referred to as a backscattering resource configuration table. The network device may configure, for the terminal device through the first resource configuration information, a starting time corresponding to each resource configuration index in the at least one resource configuration index and a duration corresponding to the each resource configuration index. Further, the network device may indicate a first resource configuration index used by the terminal device through the first indication information, so that the terminal device determines a starting position corresponding to the first resource configuration index as the starting time of the first backscattering resource, and determines a duration corresponding to the first resource configuration index as the duration of the first backscattering resource.

Exemplarily, the first resource configuration information includes at least one of: a correspondence between a plurality of resource configuration indexes and a plurality of starting times, a correspondence between the at least one resource configuration index and a plurality of durations, and a correspondence between the plurality of resource configuration indexes and a plurality of frequency domain positions. The plurality of resource configuration indexes include the first resource configuration index. Optionally, there is a one-to-one correspondence between the plurality of resource configuration indexes and the plurality of starting times, there is a one-to-one correspondence between the at least one resource configuration index and the plurality of durations, and there is a one-to-one correspondence between the plurality of resource configuration indexes and the plurality of frequency domain positions.

Exemplarily, the first resource configuration information may be pre-configuration information, for example, information configured through a RRC signaling.

Of course, in other alternative embodiments, the first resource configuration information may also be predefined information, that is, information agreed by a protocol, which is not specifically limited in the present disclosure.

In some embodiments, the first indication information indicates the starting time of the first backscattering resource through a first offset value and a second offset value. The first offset value is used to indicate a time reference point of the first backscattering resource, and the second offset value is used to indicate an offset value of the starting time of the first backscattering resource relative to the time reference point.

Exemplarily, the terminal device, after receiving the first indication information, may determine the time reference point of the first backscattering resource based on the first offset value in the first indication information. Further, the terminal device may determine an offset value of the starting time of the first backscattering resource relative to the time reference point of the first backscattering resource based on the second offset value in the first indication information. Then, based on the time reference point of the first backscattering resource and the offset value of the starting time of the first backscattering resource relative to the time reference point of the first backscattering resource, the terminal device determines the starting time of the first backscattering resource.

Exemplarily, the first indication information includes at least one field, information carried by a second field in the at least one field is used to indicate the starting time of the first backscattering resource, and the second field is a field used to carry the first offset value and the second offset value.

Exemplarily, the first offset value is used to indicate an offset value of the time reference point of the first backscattering resource relative to a default reference point. Optionally, the default reference point may be a basic time unit with a fixed index.

In some embodiments, a time length of a basic time unit adopted by the first offset value is greater than a time length of a basic time unit adopted by the second offset value.

In this embodiment, a time length of the basic time unit adopted by the first offset value is designed to be greater than a time length of the basic time unit adopted by the second offset value. When the time length between the starting time of the first backscattering resource and the default reference point is large, a value indicated by the first indication information may be reduced with the first offset value and the second offset value, thereby reducing the overhead of the first indication information.

Exemplarily, the basic time unit adopted by the first offset value or the basic time unit adopted by the second offset value may be an absolute time unit, such as a microsecond, a millisecond, a second, etc. Optionally, the basic time unit adopted by the first offset value or the basic time unit adopted by the second offset value may be a relative time unit. For example, the basic time unit may be a basic unit for backscattering communication or a basic time unit for cellular communication, including but not limited to a symbol, a slot, a sub- slot, a subframe, a frame, etc.

In some embodiments, the first indication information is carried in at least one of:
downlink control information (Downlink Control Information, DCI), a higher-layer signaling, and dedicated control information for backscattering communication.

Exemplarily, when the first indication information is carried in DCI and the first UCI includes HARQ-ACK feedback for PDSCH, DCI where the first indication information is located may be the same as DCI used to schedule PDSCH, or may be different from DCI used to schedule PDSCH.

Exemplarily, the high-layer signaling may be a radio resource control (Radio Resource Control, RRC) signaling.

In some embodiments, the S210 may include:
determining first pre-configured resources for backscattering communication;
determining candidate backscattering resources for the first UCI based on the first pre-configured resources; and
determining the first backscattering resource based on the candidate backscattering resources.

In this embodiment, the network device may pre-allocate the first pre-configured resources for the backscattering communication to the terminal device in time domain. Optionally, the first pre-configured resources may be time domain resources used for UCI reporting. Optionally, the first pre-configured resources may also be referred to as semi-static resources or semi-statically configured resources. Based on this, when the terminal device needs to report the first UCI, the terminal device may directly determine the candidate backscattering resources in the pre-allocated first pre-configured resources, and then determine the first backscattering resource from the candidate backscattering resources. Optionally, the candidate backscattering resources may also be referred to as backscattering resources used for UCI reporting.

In some embodiments, the terminal device determines at least one resource pattern used by the terminal device. Each resource pattern of the at least one resource pattern is used to indicate a resource for backscattering communication in a time domain resource set. The terminal device determines the first pre-configured resources based on the each resource pattern and a time domain resource set corresponding to the each resource pattern.

Exemplarily, a number of the at least one resource pattern is determined through DCI, a higher-layer signaling, dedicated control information for backscattering communication, etc. Optionally, the high-layer signaling may be radio resource control (Radio Resource Control, RRC) signaling.

Exemplarily, the time domain resource set may include at least one basic time unit. The basic time unit may be an absolute time unit, such as a microsecond, a millisecond, a second, etc. Optionally, the basic time unit may be a relative time unit, for example, the basic time unit may be a basic unit for backscattering communication or a basic time unit for performing cellular communication, including but not limited to a symbol, a slot, a sub-slot, a subframe, a frame, etc.

Exemplarily, the each resource pattern may include R bits, and each bit of the R bits may correspond to one resource unit or a part of one resource unit in the time domain resource set. For example, each bit of the R bits may correspond to one resource unit, or half or one third of one resource unit in the time domain resource set. A value of each bit is used to indicate whether the resource unit or resource corresponding to the each bit is a resource used for backscattering communication. For example, when the value of each bit is a first value, it is used to indicate that the resource unit or resource corresponding to the each bit is a resource for backscattering communication; and when the value of each bit is a second value, it is used to indicate that the resource unit or resource corresponding to the each bit is not a resource for backscattering communication. Optionally, the first value is 1 and the second value is 0. Optionally, the first value is 0 and the second value is 1.

Exemplarily, assuming that the time domain resource set includes 10 resource units and a first resource pattern in the at least one resource pattern may be information with10 bits in length, and each bit corresponds to one resource unit in the time domain resource set. For example, the first resource pattern may be 0101010101, where 0 represents that the resource unit at a corresponding position is not a resource for backscattering communication, and 1 represents that the resource unit at a corresponding position is a resource for backscattering communication. For another example, the first resource pattern may be 1010101010, where 1 represents that the resource unit at a corresponding position is not a resource for backscattering communication, and 0 represents that the resource unit at a corresponding position is a resource for backscattering communication.

Exemplarily, assuming that the time domain resource set includes 10 resource units and the second resource pattern in the at least one resource pattern may include information with 20 bits in length, and each bit corresponds to half of one resource unit in the time domain resource set. For example, the second resource pattern may be 10101010101010101010, where 0 represents that the resource unit at a corresponding position is not a resource for backscattering communication, and 1 represents that the resource unit at a corresponding position is a resource for backscattering communication. For another example, the second resource pattern may be 0101010101010101010101, where 1 represents that the resource unit at a corresponding position is not a resource for backscattering communication, and 0 represents that the resource unit at a corresponding position is a resource for backscattering communication.

Exemplarily, assuming that the time domain resource set includes 10 resource units and the second resource pattern in the at least one resource pattern may include information with 30 bits in length, and each bit corresponds to half of one resource unit in the time domain resource set. For example, the second resource pattern may be 10101010101010101010101010101010, where 0 represents that the resource unit at a corresponding position is not a resource for backscattering communication, and 1 represents that the resource unit at a corresponding position is a resource for backscattering communication. For another example, the second resource pattern may be 0101010101010101010101010101010101, where 1 represents that the resource unit at a corresponding position is not a resource for backscattering communication, and 0 represents that the resource unit at a corresponding position is a resource for backscattering communication.

Of course, indicating the resource for backscattering communication in the resource set through the resource pattern is only an example of the present disclosure, which should not be construed as a limitation to the present disclosure.

For example, in other alternative embodiments, a resource for backscattering communication in a time domain resource set may also be determined by indicating a starting time domain position of a resource for backscattering communication and a duration and a period of a resource for the backscattering communication in the time domain resource set. For example, when a resource for backscattering communication in a time domain resource set is a periodic resource, the resource for the backscattering communication in the time domain resource set may be indicated by indicating a starting time domain position of a resource for backscattering communication and a duration and a period of a resource for the backscattering communication in the time domain resource set. For example, when a resource for backscattering communication in a time domain resource set is a periodic resource, for each resource pattern, the network device may indicate to the terminal device: the starting time domain position of the resource for the backscattering communication in the time domain resource set being a starting position of a second resource unit; the duration of the resource for the backscattering communication being one resource unit, or half or one third of one resource unit; and a period of the resource for the backscattering communication.

For another example, in other alternative embodiments, a starting position and an ending position of a resource for backscattering communication in a time domain resource set may be indicated. For example, when a resource for backscattering communication in a time domain resource set is not a periodic resource, the resource for the backscattering communication in the time domain resource set may be indicated by indicating a starting position and an ending position of a resource for the backscattering communication in the time domain resource set. For example, when a resource for backscattering communication in a time domain resource set is not a periodic resource, for each resource pattern, the network device may indicate to the terminal device: the starting position of the resource for the backscattering communication being a first resource unit and the ending position of the resource for the backscattering communication being a third resource unit.

Exemplarily, assuming that the terminal device uses M resource patterns, the terminal device may determine the first pre-configured resources based on the M resource patterns and a time domain resource set corresponding to each resource pattern of the M resource patterns. For example, the terminal device may perform a modulo operation on the M based on an index of a first time domain resource set, and determine a resource pattern corresponding to a result of the operation as the resource pattern used by the first time domain resource set.

Exemplarily, from the perspective of a certain time domain resource set, assuming that an index of the certain time domain resource set is X, a resource pattern used by the certain time domain resource set may be a resource pattern corresponding to X mod M.

Exemplarily, from the perspective of an entire time domain resource set, a system frame includes 1024 radio frames with indexes from 0 to 1023. Assuming that each time domain resource set is a radio frame, the terminal device may determine a radio frame corresponding to each resource pattern by traversing the resource patterns used by each radio frame in the 1024 radio frames. For example, the terminal device may perform a modulo operation on the M patterns used by the terminal device based on an index of each radio frame, and determine the resource pattern corresponding to a result of the operation as the resource pattern used by each radio frame.

In some embodiments, two adjacent time domain resource sets corresponding to each resource pattern are continuous time domain resource sets in time domain, or the time domain resource set corresponding to each resource pattern is a periodic time domain resource set in time domain.

Exemplarily, all time domain resources corresponding to each resource pattern constitutes a continuous time domain resource set in time domain.

Exemplarily, the at least one pattern is a resource pattern, and all time domain resources corresponding to the one resource pattern are a continuous time domain resource set in time domain. In other words, the first pre-configured resources include resources indicated by the one resource pattern in any one time domain resource set.

Exemplarily, the at least one pattern is of a plurality of resource patterns, and a time domain resource set corresponding to each resource pattern of the plurality of resource patterns is a periodic time domain resource set in time domain. Optionally, the time domain resource sets corresponding to the plurality of resource patterns are staggered time domain resource sets or interlaced time domain resource sets.

Exemplarily, the terminal device may use at least one resource pattern.

Exemplarily, in a time domain resource, different time domain resource sets use the same resource pattern.

Exemplarily, in a time domain resource, different time domain resource sets may use different resource patterns.

Exemplarily, in a time domain resource, a time domain resource set may be periodically configured, that is, a time domain resource set including a backscattering resource for UCI reporting may be periodically configured.

In some embodiments, the first pre-configured resources are periodic resources in time domain.

In some embodiments, the terminal device determines backscattering resources after a first moment related to the first UCI in the first pre-configured resources, as the candidate backscattering resources.

Exemplarily, the first moment is a moment when the terminal generates the first UCI, or the first moment is a moment when the terminal device determines that the first UCI needs to be reported.

Exemplarily, when the first UCI includes HARQ-ACK feedback for at least one PDSCH, the first moment may be a moment after an ending moment or a starting moment of a basic time unit where an ending moment of at least one PDSCH is located and separated from the ending moment or the starting moment of the basic time unit by the first time length.

In some embodiments, the terminal device determines a backscattering resource randomly selected from the candidate backscattering resources as the first backscattering resource; or the terminal device determines a first one backscattering resource from the candidate backscattering resources as the first backscattering resource.

Exemplarily, the terminal device determining the backscattering resource randomly selected from the candidate backscattering resources as the first backscattering resource refers to that the network device may receive the first UCI in a blind detection manner. When the terminal device determines the first one backscattering resource of the candidate backscattering resources as the first backscattering resource, the network device may receive the first UCI in a blind detection manner. Of course, in a case where the network device is able to determine the candidate backscattering resources, the network device may also determine the first one backscattering resource of the candidate backscattering resources as the first backscattering resource, and receive the first UCI on the first one backscattering resource.

In some embodiments, the method 200 may further include:
receiving, by the terminal device, second resource configuration information sent from the network device;
where the second resource configuration information includes configuration information of at least one pre-configured resource, and the at least one pre-configured resource includes the first pre-configured resource.

Exemplarily, configuration information of each pre-configured resource of the at least one pre-configured resource may include one or more resource patterns used by the terminal device. After the terminal device receives the second resource configuration information, the network device may indicate the first pre-configured resources used by the terminal device or at least one resource pattern used by the terminal device. Correspondingly, after the terminal device determines the at least one resource pattern to be used, the first pre-configured resources used by the terminal device may be determined to perform backscattering communication based on the at least one resource pattern, and then determines the first backscattering resource for reporting the first UCI.

In some embodiments, S210 may include:
in a case where the first UCI includes HARQ feedback information of at least one PDSCH, determining a starting time of the first backscattering resource based on an ending position of the at least one PDSCH and a first time length.

Exemplarily, the first time length is greater than or equal to a processing delay of a conventional PDSCH. Optionally, the processing delay of the conventional PDSCH may include a receiving delay and a parsing delay of the conventional PDSCH. Optionally, the conventional PDSCH may be bit information with a fixed length.

Exemplarily, the first time length may include at least one basic time unit. Optionally, the basic time unit may be an absolute time unit, such as a microsecond, a millisecond, a second, etc. Optionally, the basic time unit may be a relative time unit, for example, the basic time unit may be a basic unit for backscattering communication or a basic time unit for cellular communication, including but not limited to a symbol, a slot, a sub-slot, a subframe, s frame, etc.

Exemplarily, a value of the first time length may be indicated or configured by the network device, or a value of the first time length may be a preset value. Optionally, the value of the first time length may be obtained through DCI, a high-layer signaling, dedicated control information for the backscattering communication, etc. Optionally, the high-layer signaling may be radio resource control (Radio Resource Control, RRC) signaling.

Exemplarily, the terminal device receives second indication information, and the second indication information is used to indicate the first time length.

Exemplarily, the second indication signal indicates the first time length through a third offset value and a fourth offset value. The third offset value is used to indicate a time reference point of the first time length, and the fourth offset value is used to indicate an offset value of an ending position of the first time length relative to the time reference point.

Exemplarily, after the terminal device receives the second indication information, the terminal device may determine the time reference point of the first time length based on the third offset value in the second indication information; further, may determine the offset value of the ending position of the first time length relative to the time reference point of the first time length based on the fourth offset value in the second indication information; and then, determines the ending position of the first time length based on the time reference point of the first time length and the offset value of the ending position of the first time length relative to the time reference point of the first time length.

Exemplarily, the second indication information includes one or more fields, and the one or more fields are used to carry the third offset value and the fourth offset value.

Exemplarily, the third offset value is used to indicate an offset value of a time reference point of the first time length relative to a default reference point of the first time length. Optionally, the default reference point of the first time length may be an ending position of the at least one PDSCH, and a starting position or an ending position of the basic time unit where the ending position of the at least one PDSCH is located.

In some embodiments, a time length of a basic time unit adopted by the third offset value is greater than a time length of a basic time unit adopted by the fourth offset value.

In this embodiment, a time length of a basic time unit adopted by the third offset value is designed to be greater than a time length of a basic time unit adopted by the fourth offset value. When the time length of the ending position of the first time length relative to the default reference point is large, the terminal device may reduce a value indicated by the second indication information with the third offset value and the fourth offset value, thereby reducing the overhead of the second indication information.

In some embodiments, a moment after the ending position of the at least one PDSCH and separated from the ending position by the first duration is determined as the starting time of the first backscattering resource; or a moment after a starting position or an ending position of a basic time unit where the ending position of the at least one PDSCH is located and separated from the starting position or the ending position of the basic time unit by the first time length is determined as the starting time of the first backscattering resource; or a starting position of a first one backscattering resource after the ending position of the at least one PDSCH and separated from the ending position by the first time length is determined as the starting time of the first backscattering resource; or a starting position of a first one backscattering resource after a starting position or an ending position of a basic time unit where an ending position of the at least one PDSCH is located and separated from the starting position or the ending position of the basic time unit by the first time length is determined as the starting time of the first backscattering resource.

Exemplarily, a starting position of the first time length may be the ending position of the at least one PDSCH.

Exemplarily, a starting position of the first time length may be the starting position or the ending position of the basic time unit where the ending position of the at least one PDSCH is located.

Exemplarily, the at least one PDSCH may be one PDSCH, that is, the first UCI may include HARQ-ACK feedback for the one PDSCH. At this time, the terminal device may determine a moment after the ending position of the one PDSCH (or after the starting position or ending position of the basic time unit where the ending position of the one PDSCH is located) and separated from the ending position by the first time length as the starting time of the first backscattering resource.

Exemplarily, the at least one PDSCH may be a plurality of PDSCHs, that is, the first UCI may include HARQ-ACK feedback for the plurality of PDSCHs. At this time, the terminal device may determine a moment after the ending position of the plurality of PDSCHs (or after the starting position or ending position of the basic time unit where the ending position of the plurality of PDSCHs is located) and separated from the ending position by the first time length as the starting time of the first backscattering resource.

In some embodiments, a number of the at least one PDSCH is indicated or configured by the network device, or a number of the at least one PDSCH is a preset value.

Exemplarily, a number of the at least one PDSCH is obtained through DCI, a higher-layer signaling, dedicated control information for the backscattering communication, etc. Optionally, the high-layer signaling may be a radio resource control (Radio Resource Control, RRC) signaling.

Exemplarily, assuming that the number of the at least one PDSCH is N, when the first UCI includes HARQ feedback information of N PDSCHs, the starting time of the first backscattering resource is determined based on the first time length and the ending position of the N PDSCHs. A value of N is indicated or configured by the network device, or a value of N is a preset value.

Exemplarily, the HARQ feedback information includes HARQ-ACK information and/or HARQ NACK information.

In some embodiments, a time length of an interval between two adjacent PDSCHs in the at least one PDSCH is less than or equal to the first time length.

Exemplarily, assuming that the number of the at least one PDSCH is N, when the first UCI includes HARQ feedback information of N PDSCHs, a starting time of the first backscattering resource is determined based on the first time length and the ending position of the N PDSCHs. The terminal device determines the value of N according to a reception situation of the PDSCH.

Exemplarily, the terminal device determines whether the at least one PDSCH includes a PDSCH other than the first PDSCH within the first time length after the ending position of the first PDSCH (or after the starting position or ending position of the basic time unit where the ending position of the first PDSCH is located), according to the reception situation of the PDSCH. For example, when the terminal device receives the second PDSCH within the first time length after the ending position of the first PDSCH (or after the starting position or ending position of the basic time unit where the ending position of the first PDSCH is located), the terminal device uses the second PDSCH as the PDSCH in the at least one PDSCH. For another example, when the terminal device does not receive the second PDSCH within the first time length after the ending position of the first PDSCH (or after the starting position or ending position of the basic time unit where the ending position of the first PDSCH is located), the terminal device only uses the first PDSCH as the PDSCH of the at least one PDSCH. Further, if the terminal device has received the second PDSCH, the terminal device determines whether the at least one PDSCH includes a PDSCH other than the first PDSCH and the second PDSCH according to a reception situation of the PDSCH within the first time length after the ending position of the second PDSCH (or after the starting position or ending position of the basic time unit where the ending position of the second PDSCH is located), until the terminal device does not receive a new PDSCH within the first time length after the ending position of the most recently received PDSCH (or after the starting position or ending position of the basic time unit where the ending position of the most recently received PDSCH is located), and then, determines all PDSCHs that have been received as the at least one PDSCH.

In some embodiments, the first time length is indicated or configured by the network device, or the first time length is a preset time length.

In some embodiments, S220 may include:
reporting the first UCI to the network device by a manner of backscattering a first signal or a first carrier on the first backscattering resource.

In some embodiments, the first backscattering resource is a downlink resource, and the first signal includes at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from the other terminal devices on a flexible resource when the downlink resource is a flexible resource.

Exemplarily, the first backscattering resource may be a downlink resource (which may include a flexible resource), and at this time, the terminal device performs backscattering communication based on a downlink signal, a dedicated carrier, or communication signals of other smart device, thereby achieving reporting of the first UCI. Optionally, the downlink signal may be a downlink signal sent from the network device to the terminal device, including but not limited to PDSCH, PDCCH, a dedicated carrier (for backscattering), etc., or may also be a downlink signal sent from the network device to other terminals, including but not limited to PDSCH, PDCCH, etc. Optionally, the dedicated carrier may be a carrier generated and sent by the terminal device itself, or may also be a carrier generated and sent by the first device. Optionally, the first device is a third-party device other than the network device and the terminal device, for example, a dedicated carrier transmission node, a smart terminal device, an smart network device, a customer premises equipment (Customer Premises Equipment, CPE), etc. Optionally, if the downlink resource is a flexible resource and is temporarily indicated as a resource for downlink transmission relative to the terminal device, but the flexible resource used by other terminals is temporarily indicated as a resource for uplink transmission, the terminal device may perform backscattering based on the uplink signal of the other terminals, such as PUSCH, PUCCH, SR, etc. Optionally, if there is a sideline terminal, the terminal device may use a signal of the sideline terminal for performing backscattering.

In some embodiments, the first backscattering resource is an uplink resource, and the first signal includes at least one of:
an uplink signal sent from the terminal device to the network device;
an uplink signal sent from other terminal devices to the network device;
a sidelink signal sent from other terminal devices;
a signal sent from the terminal device or third-party device on a generated dedicated carrier; and
an uplink signal, a downlink signal or a sidelink signal sent from the other terminal device on a flexible resource when the uplink resource is a flexible resource.

Exemplarily, the first backscattering resource may be an uplink resource (may include a flexible resource), and at this time, the terminal device performs backscattering communication based on an uplink signal or a dedicated carrier or communication signal of other smart devices, thereby realizing reporting of the first UCI. Optionally, the uplink signal may be an uplink signal sent from the terminal device to the network device, including but not limited to PUSCH, PUCCH, etc.; optionally, the uplink signal may be an uplink signal sent from other terminals to the network device, including but not limited to PUSCH, PUCCH, etc. Optionally, the dedicated carrier may be a carrier generated and sent by the terminal device itself, or may also be a carrier generated and sent by the first device. Optionally, the first device is a third-party device other than the network device and the terminal device, such as, a dedicated carrier transmission node, a smart terminal device, a smart network device, CPE, etc. Optionally, if the uplink resource is a flexible resource and is temporarily indicated as a resource for uplink transmission relative to the terminal device, but the flexible resource used by other terminals is temporarily indicated as a resource for downlink transmission, the terminal device may perform backscattering based on a downlink signal of other terminals, such as PDSCH, PDCCH, etc. Optionally, if there is a sidelink terminal, the terminal device may use a signal of the sideline terminal for performing backscattering.

In some embodiments, the first UCI includes at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

It should be noted that as described above, the present disclosure exemplarily provides the following three modes upon determining the first backscattering resource.

Mode 1: the terminal device determines the first backscattering resource through the first indication information sent from the network device.

Mode 2: the terminal device determines the first backscattering resource based on a pre-allocated first pre-configured resource.

Mode 3: when the first UCI includes HARQ feedback information of the at least one PDSCH, the terminal device determines the starting time of the first backscattering resource based on the first time length and the ending position of the at least one PDSCH.

In a specific implementation, the above three modes may be implemented independently or in combination with each other. The following provides an exemplary explanation of the preferred embodiments of the present disclosure in combination with the 3 modes.

### Embodiment 1:

In this embodiment, the above-mentioned mode 1 and mode 3 may be implemented independently, or the above-mentioned mode 1 and mode 3 may be combined to determine the first backscattering resource. For example, the terminal device may determine the first backscattering resource based on the first indication information sent from the network device. For another example, when the first UCI includes HARQ feedback information of the at least one PDSCH, the terminal device may determine a starting time of the first backscattering resource based on the first indication information, the ending position of the at least one PDSCH, and the first time length. For another example, the terminal device may determine the starting time of the first backscattering resource only based on the ending position of the at least one PDSCH and the first time length. For another example, when the terminal device has not received the first indication information, the terminal device determines the starting time of the first backscattering resource only based on the ending position of the at least one PDSCH and the first time length.

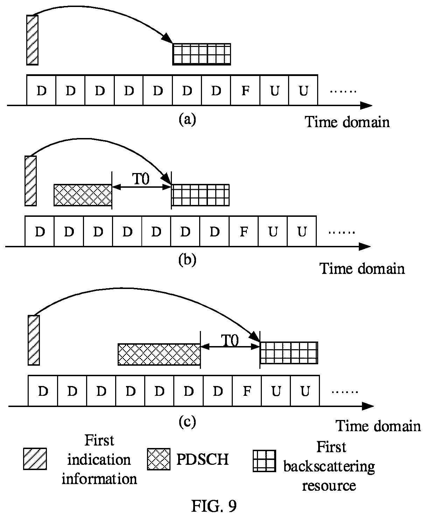

FIG. 9 is an example of determination of a first backscattering resource based on first indication information provided by the embodiments of the present disclosure. D represents a basic time unit for downlink transmission, U represents a basic time unit for uplink transmission, and F represents a flexible basic time unit.

As shown in (a) in FIG. 9, it is assumed that the first indication information sent from the network device is used to indicate that the starting time of the first backscattering resource is a starting position of a sixth basic time unit, and the duration of the first backscattering resource is two basic time units, and at this time, the terminal device determines that the first backscattering resource includes the sixth basic time unit and a seventh basic time unit, that is, the first backscattering resource includes two basic time units for downlink transmission.

As shown in (b) of FIG. 9, it is assumed that the first indication information sent from the network device is used to indicate that the starting time of the first backscattering resource is a starting position of a sixth basic time unit, and the duration of the first backscattering resource is two basic time units. In addition, assuming that the first UCI includes HARQ-ACK feedback for one PDSCH (e.g., occupying two basic time units), and the first time length includes two basic time units, a position after an ending position of the one PDSCH and separated from the ending position by the first time length is also the starting position of the sixth basic time unit. Based on this, the terminal device may determine the starting time of the first backscattering resource based on the first indication information, the ending position of the one PDSCH and the first time length. That is, since the starting time of the first backscattering resource indicated by the first indication information and the position separated by the first time length after the ending position of the one PDSCH are both the starting position of the sixth basic time unit, the starting time of the first backscattering resource is the starting position of the sixth basic time unit, i.e., the first backscattering resource includes two basic time units for downlink transmission.

Of course, in other alternative embodiments, when the starting time of the first backscattering resource indicated by the first indication information and a position separated by the first time length after the ending position of the one PDSCH are different from each other, a position earlier or later in time domain may be determined as the starting time of the first backscattering resource, or a position may be randomly selected from the starting time of the first backscattering resource indicated by the first indication information and a position separated by the first duration after the ending position of the one PDSCH, as the starting time of the first backscattering resource. Or, when the first indication information does not indicate the starting time of the first backscattering resource, the starting time of the first backscattering resource is determined according to the ending position of the one PDSCH and the first time length. Or, the first indication information may indicate that the starting time of the first backscattering resource is a position with an interval of the first time length relative to the ending position of the one PDSCH, which is not specifically limited by the embodiments of the present disclosure.

As shown in (c) of FIG. 9, it is assumed that the first indication information sent from the network device is used to indicate that the starting time of the first backscattering resource is a starting position of a ninth basic time unit, and the duration of the first backscattering resource is two basic time units. In addition, assuming that the first UCI includes HARQ-ACK feedback for one PDSCH (for example, occupying 3 basic time units), and the first time length includes two basic time units, a position separated by the first time length after the ending position of the one PDSCH is also the starting position of the ninth basic time unit. Based on this, the terminal device may determine the starting time of the first backscattering resource based on the first indication information, the ending position of the one PDSCH and the first time length. That is, since the starting time of the first backscattering resource indicated by the first indication information and the position separated by the first duration after the ending position of the one PDSCH are both the starting position of the ninth basic time unit, the starting time of the first backscattering resource is the starting position of the ninth basic time unit, i.e., the first backscattering resource includes two basic time units for uplink transmission.

Of course, in other alternative embodiments, when the starting time of the first backscattering resource indicated by the first indication information and the position separated by the first time length after the ending position of the one PDSCH are different from each other, a position earlier or later in time domain may be determined as the starting time of the first backscattering resource, or a position may be randomly selected from the starting time of the first backscattering resource indicated by the first indication information and the position separated by the first time length after the ending position of the one PDSCH, as the starting time of the first backscattering resource, which is not specifically limited by the embodiments of the present disclosure.

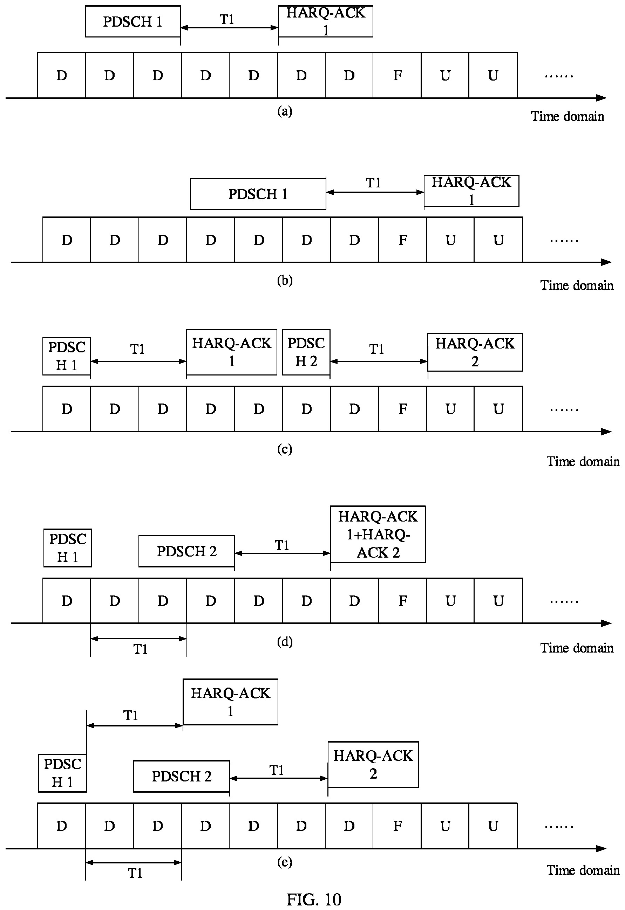

FIG. 10 is an example of determination of a first backscattering resource for carrying HARQ-ACK based on a position of a PDSCH resource provided by the embodiments of the present disclosure. D represents a basic time unit for downlink transmission, U represents a basic time unit for uplink transmission, and F represents a flexible basic time unit.

As shown in (a) in FIG. 10, if no new PDSCH is received within a T1 time length (e.g., occupying two basic time units) after a PDSCH 1 (e.g., occupying a second basic time unit and a third basic time unit) is ended, the terminal device reports UCI including HARQ-ACK 1 feedback information of the PDSCH 1 based on a manner of backscattering from a moment with an interval T1 after an ending moment of the PDSCH 1 (i.e., a starting moment of a sixth basic time unit). For example, the terminal device reports UCI including HARQ-ACK 1 feedback information of the PDSCH 1 to the network device in the sixth basic time unit and a seventh basic time unit. That is, the terminal device reports the UCI including the HARQ-ACK 1 feedback information of the PDSCH 1 to the network device in two basic time units for downlink transmission.

As shown in (b) in FIG. 10, if no new PDSCH is received within a T1 time length (e.g., occupying two basic time units) after a PDSCH 1 (e.g., occupying a fourth basic time unit to a sixth basic time unit) is ended, the terminal device reports UCI including HARQ-ACK 1 feedback information of the PDSCH 1 from a moment with an interval of the T1 after an ending moment of the PDSCH 1 (i.e., a starting moment of a ninth basic time unit). For example, the terminal device reports the UCI including the HARQ-ACK 1 feedback information of the PDSCH 1 to the network device in the ninth basic time unit and a tenth basic time unit. That is, the terminal device reports the UCI including the HARQ-ACK 1 feedback information of the PDSCH 1 to the network device in two basic time units for uplink transmission.

As shown in (c) in FIG. 10, if no new PDSCH is received within a T1 time length (e.g., occupying two basic time units) after a PDSCH 1 (e.g., occupying a first basic time unit) is ended, the terminal device reports UCI including HARQ-ACK 1 feedback information of the PDSCH 1 from a moment with an interval of the T1 after an ending moment of the PDSCH 1 (i.e., a starting moment of a fourth basic time unit) based on a manner of backscattering. For example, the terminal device reports the UCI including the HARQ-ACK 1 feedback information of the PDSCH 1 to the network device in the fourth basic time unit and a fifth basic time unit. That is, the terminal device reports the UCI including the HARQ-ACK 1 feedback information of the PDSCH 1 to the network device in two basic time units for downlink transmission. Further, if no new PDSCH is received within the T1 time length (e.g., occupying two basic time units) after a PDSCH 2 (e.g., occupying a sixth basic time unit) is ended, the terminal device reports UCI including HARQ-ACK 2 feedback information of the PDSCH 2 from a moment with an interval of T1 after an ending moment of the PDSCH 2 (i.e., a starting moment of a ninth basic time unit) based on a manner of backscattering. For example, the terminal device reports the UCI including the HARQ-ACK 2 feedback information of the PDSCH 2 to the network device in the ninth basic time unit and a tenth basic time unit. That is, the terminal device reports the UCI including the HARQ-ACK 2 feedback information of the PDSCH 2 to the network device in two basic time units for uplink transmission.

As shown in (d) in FIG. 10, if a new PDSCH 2 (e.g., occupying a third basic time unit and a fourth basic time unit) is received within a T1 time length (e.g., occupying two basic time units) after a PDSCH 1 (e.g., occupying a first basic time unit) is ended, and further, if no new PDSCH is received within the T1 time length after the PDSCH 2 is ended, the terminal device reports UCI including HARQ-ACK 1 feedback information of the PDSCH 1 and HARQ-ACK 2 feedback information of the PDSCH 2 from a moment with an interval of the T1 after an ending moment of the PDSCH 2 (i.e., a starting moment of a seventh basic time unit) based on a manner of backscattering. For example, the terminal device reports the UCI including the HARQ-ACK 1 feedback information of the PDSCH 1 and the HARQ-ACK 2 feedback information of the PDSCH 2 to the network device in the seventh basic time unit and an eighth basic time unit. That is, the terminal device reports the UCI including HARQ-ACK 1 feedback information of the PDSCH 1 and the HARQ-ACK 2 feedback information of the PDSCH 2 to the network device in one basic time unit for downlink transmission and one flexible basic time unit.

As shown in (e) in FIG. 10, if a new PDSCH 2 (e.g., occupying a third basic time unit and a fourth basic time unit) is received within a T1 time length (e.g., occupying two basic time units) after a PDSCH 1 (e.g., occupying a first basic time unit) is ended, and further, if no new PDSCH is received within the T1 time length after the PDSCH 2 is ended, the terminal device reports UCI including HARQ-ACK 1 feedback information of the PDSCH 1 from a moment with an interval of the T1 after an ending moment of the PDSCH 1 (i.e., a starting moment of the fourth basic time unit) based on a manner of backscattering. For example, the terminal device reports the UCI including the HARQ-ACK 1 feedback information of the PDSCH 1 to the network device in the fourth basic time unit and a fifth basic time unit. That is, the terminal device reports the UCI including the HARQ-ACK 1 feedback information of the PDSCH 1 to the network device in two basic time units for downlink transmission. Further, the terminal device reports UCI including HARQ-ACK 2 feedback information of the PDSCH 2 from a moment with an interval of the T1 after an ending moment of the PDSCH 2 (i.e., a starting time of a seventh basic time unit) based on a manner of backscattering. For example, the terminal device reports the UCI including the HARQ-ACK 2 feedback information of the PDSCH 2 to the network device in the seventh basic time unit and an eighth basic time unit. That is, the terminal device reports the UCI including the HARQ-ACK 2 feedback information of the PDSCH 2 to the network device in one basic time unit for downlink transmission and one flexible basic time unit.

Of course, in other alternative embodiments, the network device may also configure a number, N, of PDSCHs associated with the UCI (carrying HARQ-ACK) reporting based on backscattering. At this time, the terminal device may start performing UCI (carrying HARQ-ACK of N PDSCHs) reporting based on backscattering from a moment with an interval of the T1 time length after an N-th PDSCH is received. Optionally, N may be a preset fixed value. Optionally, N may be configured by the network device, for example, through other control information or a high-level signaling. Optionally, N may be either explicitly or implicitly configured. Optionally, the high-layer signaling may be a radio resource control (Radio Resource Control, RRC) signaling.

### Embodiment 2

In this embodiment, when the first UCI includes HARQ feedback information of at least one PDSCH, the terminal device determines the starting time of the first backscattering resource based on the ending position of the at least one PDSCH and the first time length. Further, the network device indicates the first time length by sending second indication information to the terminal device.

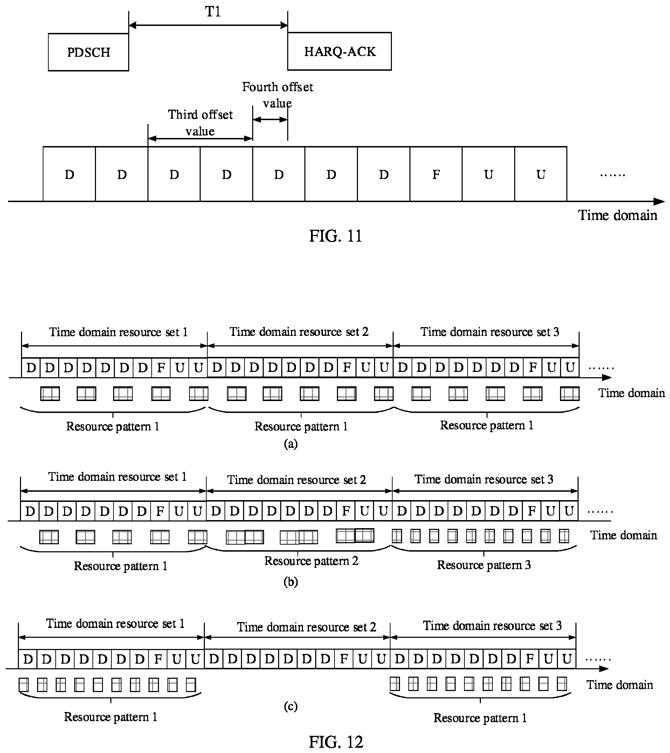

FIG. 11 is an example of a first time length provided by the embodiments of the present disclosure.

As shown in FIG. 11, the second indication signal indicates the first time length T1 through a third offset value and a fourth offset value. The third offset value is used to indicate a time reference point of the first time length T1, and the fourth offset value is used to indicate an offset value of an ending position of the first time length T1 relative to the time reference point. For example, the third offset value is used to indicate an offset value of the time reference point of the first time length T1 relative to a default reference point of the first time length T1. The default reference point of the first time length T1 may be an ending position of a basic time unit where an ending position of at least one PDSCH is located. Further, a time length of a basic time unit adopted by the third offset value is greater than a time length of a basic time unit adopted by the fourth offset value.

In this embodiment, a time length of a basic time unit adopted by the third offset value is designed to be greater than a time length of a basic time unit adopted by the fourth offset value. When a time length of an ending position of the first time length relative to the default reference point is large, the terminal device may reduce a value indicated by the second indication information through the third offset value and the fourth offset value, thereby reducing the overhead of the second indication information.

### Embodiment 3

In this embodiment, the above-mentioned mode 2 and mode 3 may be implemented independently, or the above-mentioned mode 2 and mode 3 may be combined, to determine the first backscattering resource. For example, the terminal device determines the first backscattering resource only based on the pre-allocated first pre-configured resources. For another example, the terminal device may determine the starting time of the first backscattering resource only based on the ending position of at least one PDSCH and the first time length. For another example, the terminal device may determine the starting time of the first backscattering resource based on the first pre-configured resources, the ending position of at least one PDSCH, and the first time length.

Exemplarily, when the terminal device determines a resource for backscattering communication, at least one resource pattern used by the terminal device may be first determined. Each resource pattern of the at least one resource pattern is used to indicate a resource for backscattering communication in a time domain resource set. Then, the terminal device determines the first pre-configured resources based on each resource pattern and a time domain resource set corresponding to each resource pattern.

Exemplarily, two adjacent time domain resource sets corresponding to each resource pattern are continuous time domain resource sets in time domain, or the time domain resource set corresponding to each resource pattern is a periodic time domain resource set in time domain.

Exemplarily, the terminal device may use at least one resource pattern.

Exemplarily, in a time domain resource, different time domain resource sets use a same resource pattern.

Exemplarily, in a time domain resource, different time domain resource set may use different resource patterns.

Exemplarily, in a time domain resource, a time domain resource set may be periodically configured, that is, a time domain resource set including backscattering resources for UCI reporting may be periodically configured.

FIG. 12 is an example of first pre-configured resources provided by the embodiments of the present disclosure.

As shown in (a) of FIG. 12, the at least one pattern is one pattern, and all time domain resource sets use the same resource pattern. For example, a time domain resource set 1 to a time domain resource set 3 use the same resource pattern, that is, all the time domain resource set 1 to the time domain resource set 3 use a resource pattern 1.

Exemplarily, the resource pattern 1 may be information with10 bits in length, where each bit corresponds to one resource unit in a time domain resource set. For example, the resource pattern 1 may be 0101010101, where 0 represents that a resource unit at a corresponding position is not a resource for backscattering communication, and 1 represents that a resource unit at a corresponding position is a resource for backscattering communication. For another example, the resource pattern 1 may be 1010101010, where 1 represents that a resource unit at a corresponding position is not a resource for backscattering communication, and 0 represents that a resource unit at a corresponding position is a resource for backscattering communication.

As shown in (b) of FIG. 12, the at least one pattern includes three resource patterns, i.e., a resource pattern 1, a resource pattern 2, and a resource pattern 3. Taking a time domain resource set 1 to a time domain resource set 3 as an example, the resource pattern used by the time domain resource set 1 is the resource pattern 1, the resource pattern used by the time domain resource set 2 is the resource pattern 2, and the resource pattern used by the time domain resource set 3 is the resource pattern 3.

Exemplarily, the resource pattern 1 may be information with10 bits in length, where each bit corresponds to one resource unit in a time domain resource set. For example, the resource pattern 1 may be 0101010101, where 0 represents that a resource unit at a corresponding position is not a resource for backscattering communication, and 1 represents that the resource unit at the corresponding position is a resource used for backscattering communication. For another example, the resource pattern 1 may be 1010101010, where 1 represents that a resource unit at a corresponding position is not a resource for backscattering communication, and 0 represents that a resource unit at a corresponding position is a resource for backscattering communication.

Exemplarily, the resource pattern 2 may be information with10 bits in length, where each bit corresponds to one resource unit in a time domain resource set. For example, the resource pattern 1 may be 0110110110, where 0 represents that a resource unit at a corresponding position is not a resource for backscattering communication, and 1 represents that a resource unit at a corresponding position is a resource for backscattering communication. For another example, the resource pattern 1 may be 1001001001, where 1 represents that a resource unit at a corresponding position is not a resource for backscattering communication, and 0 represents that a resource unit at a corresponding position is a resource for backscattering communication.

Exemplarily, the resource pattern 3 may be information with 20 bits in length, where each bit corresponds to half of a resource of one resource unit in a time domain resource set. For example, the resource pattern 1 may be 1010101010101010101010, where 0 represents that a resource unit at a corresponding position is not a resource for backscattering communication, and 1 represents that a resource unit at a corresponding position is a resource for backscattering communication. For another example, the resource pattern 1 may be 0101010101010101010101, where 1 represents that a resource unit at a corresponding position is not a resource for backscattering communication, and 0 represents that a resource unit at a corresponding position is a resource for backscattering communication.

As shown in (c) of FIG. 12, the time domain resource set may be periodically configured. For example, a period of the time domain resource set is a length of one time domain resource set, and all time domain resource sets use the same resource pattern. For example, a time domain resource set 1 and a time domain resource set 2 use a same resource pattern, that is, both use a resource pattern 1.

Exemplarily, the resource pattern 1 may be information with 20 bits in length, where each bit corresponds to half of a resource of one resource unit in a time domain resource set. For example, the resource pattern 1 may be 1010101010101010101010, where 0 represents that a resource unit at a corresponding position is not a resource for backscattering communication, and 1 represents that a resource unit at a corresponding position is a resource for backscattering communication. For another example, the resource pattern 1 may be 0101010101010101010101, where 1 represents that a resource unit at a corresponding position is not a resource for backscattering communication, and 0 represents that a resource unit at a corresponding position is a resource for backscattering communication.

Of course, FIG. 12 is only an example of the present disclosure and should not be construed as a limitation to the present disclosure. In other alternative embodiments, the resource pattern may also indicate a resource for backscattering communication in the time domain resource set in other ways.

For example, in other alternative embodiments, the resource used for backscattering communication in the time domain resource set may be determined by indicating the starting time domain position of the resource used for backscattering communication, the time length and the period of the resource used for backscattering communication in the time domain resource set. For example, when the resource used for backscattering communication in the time domain resource set are periodic resources, the resource used for backscattering communication in the time domain resource set can be indicated by indicating the starting time domain position of the resource used for backscattering communication in the time domain resource set, the time length and the period of the resource used for backscattering communication. For example, when the resource used for backscattering communication in the time domain resource set are periodic resources, for each resource pattern, the network device can indicate to the terminal device: the starting time domain position of the resource used for backscattering communication in the time domain resource set is the starting position of the second resource unit; the time length of the resource used for backscattering communication is one resource unit, or half or one third of a resource unit; and the period of the resource used for backscattering communication.

For another example, in other alternative embodiments, a starting position and an ending position of a resource for backscattering communication in a time domain resource set may be indicated. For example, when a resource for backscattering communication in a time domain resource set is not a periodic resource, the resource for the backscattering communication in the time domain resource set may be indicated by indicating a starting position and an ending position of a resource for the backscattering communication in the time domain resource set. For example, when a resource for backscattering communication in a time domain resource set is not a periodic resource, for each resource pattern, the network device may indicate to the terminal device that: the starting position of the resource for the backscattering communication is a first resource unit and the ending position of the resource for the backscattering communication is a third resource unit.

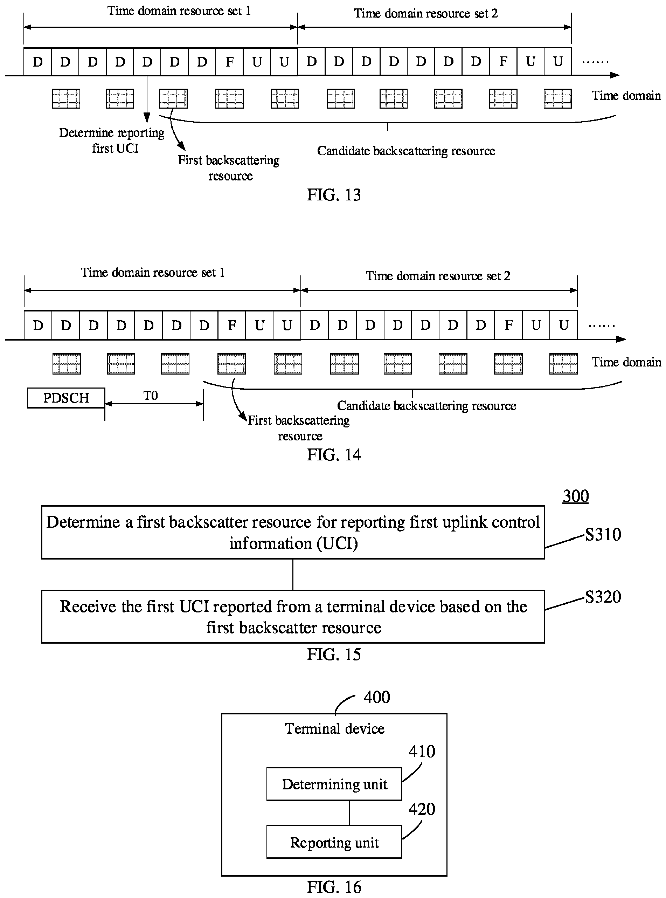

FIG. 13 and FIG. 14 are examples of a first one backscattering resource, used as a first backscattering resource by a terminal device, in candidate backscattering resources after a first moment associated with first UCI provided by the embodiments of the present disclosure.

As shown in FIG. 13, assuming that the first pre-configured resources are the backscattering resources shown in (a) in FIG. 12, the terminal device uses a first one backscattering resource in backscattering resources shown in (a) in FIG. 12 and after a first moment related to the first UCI to be reported, as the first backscattering resource for sending the first UCI. That is, the terminal device reports the first UCI to the network device on the first one backscattering resource in the backscattering resources shown in (a) in FIG. 12 and located after the first moment. The first moment is a moment when the terminal device determines to report the first UCI.

As shown in FIG. 14, assuming that the first pre-configured resources are the backscattering resources shown in (a) in FIG. 12, the terminal device uses a first one backscattering resource in the backscattering resources shown in (a) in FIG. 12 and after a first moment related to the first UCI to be reported, as the first backscattering resource for sending the first UCI. That is, the terminal device reports the first UCI to the network device on the first one backscattering resource in the backscattering resources shown in (a) in FIG. 12 and located after the first moment. When the first UCI includes HARQ-ACK feedback for at least one PDSCH, the first moment may be a moment after an ending moment or a starting moment of a basic time unit where an ending moment of the at least one PDSCH is located, and separated from the ending moment or the starting moment of the basic time unit by a first time length T0.

It should be understood that in other alternative embodiments, a second backscattering resource may be introduced. The second backscattering resource may be used to send PUSCH data, such as PUSCH data with a data volume less than a certain threshold. A mode for determining the second backscattering resource may be similar to the mode for determining the first backscattering resource, which will not be repeated herein to avoid repetition.

Preferred implementations of the present disclosure are described in detail above in combination with the accompanying drawings; however, the present disclosure is not limited to the specific details in the above implementations. Within the technical concept of the present disclosure, a variety of simple modifications can be made to the technical solution of the present disclosure, and all these simple modifications fall in the protection scope of the present disclosure. For example, various specific technical features described in the above-mentioned specific implementations can be combined in any suitable manner without contradiction. To avoid unnecessary repetition, the present disclosure will not further explain various possible combinations. For another example, various implementations of the present disclosure may be arbitrarily combined, and as long as they do not violate the concept of the present disclosure, which should also be regarded as the contents disclosed in the present disclosure.

It should also be understood that in the various method embodiments of the present disclosure, values of serial numbers of the above-mentioned processes do not mean an order of execution. The order of execution of each process should be determined by its function and internal logic, and should not constitute any limitation on the implementation process of the embodiments of the present disclosure. In addition, in the embodiments of the present disclosure, the terms "downlink" and "uplink" are used to indicate the transmission direction of a signal or data, where the "downlink" is used to represent that the transmission direction of the signal or data is a first direction from a site to a user device of a cell, and the "uplink" is used to represent that the transmission direction of the signal or data is a second direction from a user device of a cell to a site. For example, a "downlink signal" represents that a transmission direction of the signal is a first direction.

The UCI reporting method provided according to the embodiments of the present disclosure is described in detail from the perspective of the terminal device in combination with FIGS. 8 to 14 above. The following will describe a UCI reporting method provided according to an embodiment of the present disclosure from the perspective of the network device in combination with FIG. 15.

FIG. 15 is a schematic flow chart of a UCI reporting method 300 provided by the embodiments of the present disclosure. The method 300 may be performed by the network device 110 as shown in FIG. 1.

As shown in FIG. 15, the method 300 may include:
S310, determining a first backscattering resource for reporting first uplink control information (UCI); and
S320, receiving the first UCI reported by a terminal device based on the first backscattering resource.

In some embodiments, the method 300 may further include:
sending first indication information to the terminal device, where the first indication information is used to indicate the first backscattering resource.

In some embodiments, the first indication information is used to indicate at least one of: a starting time of the first backscattering resource, a duration of the first backscattering resource, and a frequency domain position of the first backscattering resource.

In some embodiments, the first indication information indicates, through a first resource configuration index, at least one of: a starting time of the first backscattering resource, a duration of the first backscattering resource, and a frequency domain position of the first backscattering resource.

In some embodiments, the method 300 may further include:
sending first resource configuration information to the terminal device;
where the first resource configuration information includes at least one of: a correspondence between at least one resource configuration index and at least one starting time, a correspondence between the at least one resource configuration index and at least one duration, and a correspondence between the at least one resource configuration index and a frequency domain position of at least one backscattering resource. The at least one resource configuration index includes the first resource configuration index.

In some embodiments, the first indication information indicates the starting time of the first backscattering resource through a first offset value and a second offset value. The first offset value is used to indicate a time reference point of the first backscattering resource, and the second offset value is used to indicate an offset value of the starting time of the first backscattering resource relative to the time reference point.

In some embodiments, a time length of a basic time unit adopted by the first offset value is greater than a time length of a basic time unit adopted by the second offset value.

In some embodiments, the first indication information is carried in at least one of:
downlink control information (DCI), a higher-layer signaling, and dedicated control information for backscattering communication.

In some embodiments, the S310 may include:
determining first pre-configured resources for backscattering communication; and
determining candidate backscattering resources of the first UCI based on the first pre-configured resources, where the candidate backscattering resources include the first backscattering resource.

In some embodiments, determining at least one resource pattern used by the terminal device, where each resource pattern in the at least one resource pattern is used to indicate a resource for backscattering communication in a time domain resource set; and determining the first pre-configured resources based on the each resource pattern and a time domain resource set corresponding to the each resource pattern.

In some embodiments, two adjacent time domain resource sets corresponding to the each resource pattern are continuous time domain resource sets in a time domain, or a time domain resource set corresponding to the each resource pattern is a periodic time domain resource set in a time domain.

In some embodiments, the first pre-configured resources are periodic resource in time domain.

In some embodiments, determining backscattering resources after a first moment related to the first UCI in the first pre-configured resources as the candidate backscattering resources.

In some embodiments, the first backscattering resource is a randomly selected backscattering resource in the candidate backscattering resources; or the first backscattering resource is a first one backscattering resource in the candidate backscattering resources.

In some embodiments, the method 300 may further include:
sending second resource configuration information to the terminal device.
where the second resource configuration information includes configuration information of at least one pre-configured resource, and the at least one pre-configured resource includes the first pre-configured resource.

In some embodiments, the S310 may include:
in a case where the first UCI includes hybrid automatic repeat request acknowledgment (HARQ) feedback information of the at least one physical downlink shared channel (PDSCH), determining the starting time of the first backscattering resource based on a first time length and an ending position of the at least one PDSCH.

In some embodiments, a moment after the ending position of the at least one PDSCH and separated from the ending position by the first time length is determined as the starting time of the first backscattering resource; or a moment after a starting position or an ending position of a basic time unit where the ending position of the at least one PDSCH is located and separated from the starting position or the ending position of a basic time unit by the first time length is determined as the starting time of the first backscattering resource; or a starting position of a first one backscattering resource after the ending position of the at least one PDSCH and separated from the ending position by the first time length is determined as the starting time of the first backscattering resource; or a starting position of a first one backscattering resource after a starting position or an ending position of a basic time unit where the ending position of the at least one PDSCH is located and separated from the starting position or the ending position of the basic time unit by the first time length is determined as the starting time of the first backscattering resource.

In some embodiments, a number of the at least one PDSCH is indicated or configured by the network device, or a number of the at least one PDSCH is a preset value.

In some embodiments, a time length of an interval between two adjacent PDSCHs in the at least one PDSCH is less than or equal to the first duration.

In some embodiments, the first time length is indicated or configured by the network device, or the first time length is a preset time length.

In some embodiments, S320 may include:
receiving, on the first backscattering resource, the first UCI reported by the terminal device to the network device by a manner of backscattering a first signal or a first carrier.

In some embodiments, the first backscattering resource is a downlink resource, and the first signal includes at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the downlink resource is the flexible resource.

In some embodiments, the first backscattering resource is an uplink resource, and the first signal includes at least one of:
an uplink signal sent from the terminal device to the network device;
an uplink signal sent from other terminal devices to the network device;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the uplink resource is the flexible resource.

In some embodiments, the first UCI includes at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

It should be understood that steps in the UCI reporting method 300 may refer to corresponding steps in the UCI reporting method 200, which is not repeated herein for the sake of brevity.

Method embodiments of the present disclosure are described in detail in combination with FIGS. 1 to 15 above, and the following describes in detail apparatus embodiments of the present disclosure in combination with FIGS. 16 to 19.

FIG. 16 is a schematic block diagram of a terminal device 400 provided by the embodiments of the present disclosure.

As shown in FIG. 16, the terminal device 400 may include:
a determining unit 410, configured to determine a first backscattering resource for reporting first uplink control information (UCI); and
a reporting unit 420, configured to report the first UCI to a network device based on the first backscattering resource.

In some embodiments, the reporting unit 420 is further configured to:
receive first indication information sent from the network device, where the first indication information is used to indicate the first backscattering resource.

In some embodiments, the first indication information is used to indicate at least one of: a starting time of the first backscattering resource, a duration of the first backscattering resource, and a frequency domain position of the first backscattering resource.

In some embodiments, the first indication information indicates, through a first resource configuration index, at least one of: a starting time of the first backscattering resource, a duration of the first backscattering resource, and a frequency domain position of the first backscattering resource.

In some embodiments, the reporting unit 420 is further configured to:
receive first resource configuration information sent from the network device;
where the first resource configuration information includes at least one of: a correspondence between at least one resource configuration index and at least one starting time, a correspondence between the at least one resource configuration index and at least one duration, and a correspondence between the at least one resource configuration index and a frequency domain position of at least one backscattering resource. The at least one resource configuration index includes the first resource configuration index.

In some embodiments, the first indication information indicates a starting time of the first backscattering resource through a first offset value and a second offset value. The first offset value is used to indicate a time reference point of the first backscattering resource, and the second offset value is used to indicate an offset value of the starting time of the first backscattering resource relative to the time reference point.

In some embodiments, a time length of a basic time unit adopted by the first offset value is greater than a time length of a basic time unit adopted by the second offset value.

In some embodiments, the first indication information is carried in at least one of:
downlink control information (DCI), a higher-layer signaling, and dedicated control information for backscattering communication.

In some embodiments, the determining unit 410 is specifically configured to:
determine first pre-configured resources for backscattering communication;
determine candidate backscattering resources for the first UCI based on the first pre-configured resources; and
determine the first backscattering resource based on the candidate backscattering resources.

In some embodiments, the determining unit 410 is specifically configured to:
determine at least one resource pattern used by the terminal device, where each resource pattern in the at least one resource pattern is used to indicate a resource for backscattering communication in a time domain resource set; and
determine the first pre-configured resource based on the each resource pattern and a time domain resource set corresponding to the each resource pattern.

In some embodiments, two adjacent time domain resource sets corresponding to the each resource pattern are continuous time domain resource sets in time domain, or a time domain resource set corresponding to the each resource pattern is a periodic time domain resource set in time domain.

In some embodiments, the first pre-configured resources are periodic resources in time domain.

In some embodiments, the determining unit 410 is specifically configured to:
determine backscattering resources after a first moment related to the first UCI in the first pre-configured resources as the candidate backscattering resources.

In some embodiments, the determining unit 410 is specifically configured to:
determine a backscattering resource randomly selected from the candidate backscattering resources as the first backscattering resource; or
determine a first one backscattering resource in the candidate backscattering resources as the first backscattering resource.

In some embodiments, the reporting unit 420 is further configured to:
receive second resource configuration information sent from the network device.
where the second resource configuration information includes configuration information of at least one pre-configured resource, and the at least one pre-configured resource includes the first pre-configured resource.

In some embodiments, the determining unit 410 is specifically configured to:
in a case where the first UCI includes hybrid automatic repeat request acknowledgment (HARQ) feedback information of at least one physical downlink shared channel (PDSCH), determine a starting time of the first backscattering resource based on a first time length and an ending position of the at least one PDSCH.

In some embodiments, the determining unit 410 is specifically configured to:
determine a moment after the ending position of the at least one PDSCH and separated from the ending position by the first time length as the starting time of the first backscattering resource; or
determine a moment after a starting position or an ending position of a basic time unit where the ending position of the at least one PDSCH is located and separated from the starting position or the ending position of the basic time unit by the first time length as the starting time of the first backscattering resource; or
determine a starting position of a first one backscattering resource after the ending position of the at least one PDSCH and separated from the ending position by the first time length as the starting time of the first backscattering resource; or
determine a starting position of a first one backscattering resource after a starting position or an ending position of a basic time unit where the ending position of the at least one PDSCH is located and separated from the starting position or the ending position of the basic time unit by the first time length as the starting time of the first backscattering resource.

In some embodiments, a number of the at least one PDSCH is indicated or configured by the network device, or a number of the at least one PDSCH is a preset value.

In some embodiments, a time length of an interval between two adjacent PDSCHs in the at least one PDSCH is less than or equal to the first time length.

In some embodiments, the first time length is indicated or configured by the network device, or the first time length is a preset time length.

In some embodiments, the reporting unit 420 is specifically configured to:
report, on the first backscattering resource, the first UCI to the network device by a manner of backscattering a first signal or a first carrier.

In some embodiments, the first backscattering resource is a downlink resource, and the first signal includes at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the downlink resource is the flexible resource.

In some embodiments, the first backscattering resource is an uplink resource, and the first signal includes at least one of:
an uplink signal sent from the terminal device to the network device;
an uplink signal sent from other terminal devices to the network device;
a sidelink signal sent by other terminal devices;
a signal sent from the terminal device or a third-party device on a generated dedicated carrier; and
an uplink signal, a downlink signal or a sidelink signal sent from other terminal devices on a flexible resource in a case where the uplink resource is the flexible resource.

In some embodiments, the first UCI includes at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

It should be understood that the apparatus embodiments and the method embodiments may correspond to each other, and similar descriptions may refer to the method embodiments. Specifically, the terminal device 400 shown in FIG. 16 may correspond to a corresponding entity for performing the method 200 in the embodiments of the present disclosure, and the aforementioned and other operations and/or functions of respective units in the terminal device 400 are for implementing the corresponding processes in respective methods provided in the embodiments of the present disclosure, respectively, which will not be repeated herein for the sake of brevity.

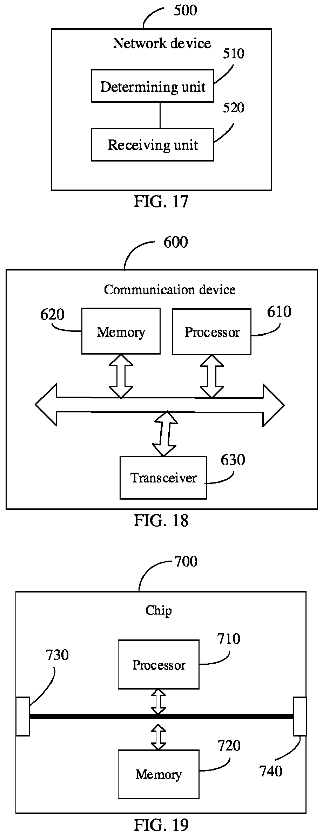

As shown in FIG. 17, the network device 500 may include:
a determining unit 510, configured to determine a first backscattering resource for reporting first uplink control information (UCI); and
a receiving unit 520, configured to receive the first UCI reported by a terminal device based on the first backscattering resource.

In some embodiments, the receiving unit 520 is further configured to:
send first indication information to the terminal device, where the first indication information is used to indicate the first backscattering resource.

In some embodiments, the first indication information is used to indicate at least one of: a starting time of the first backscattering resource, a duration of the first backscattering resource, and a frequency domain position of the first backscattering resource.

In some embodiments, the first indication information indicates, through a first resource configuration index, at least one of: a starting time of the first backscattering resource, a duration of the first backscattering resource, and a frequency domain position of the first backscattering resource.

In some embodiments, the receiving unit 520 is further configured to:
send first resource configuration information to the terminal device.
where the first resource configuration information includes at least one of: a correspondence between at least one resource configuration index and at least one starting time, a correspondence between the at least one resource configuration index and at least one duration, and a correspondence between the at least one resource configuration index and a frequency domain position of at least one backscattering resource. The at least one resource configuration index includes the first resource configuration index.

In some embodiments, the first indication information indicates a starting time of the first backscattering resource through a first offset value and a second offset value. The first offset value is used to indicate a time reference point of the first backscattering resource, and the second offset value is used to indicate an offset value of the starting time of the first backscattering resource relative to the time reference point.

In some embodiments, a time length of a basic time unit adopted by the first offset value is greater than a time length of a basic time unit adopted by the second offset value.

In some embodiments, the first indication information is carried in at least one of:
downlink control information (DCI), a higher-layer signaling, and dedicated control information for backscattering communication.

In some embodiments, the determining unit 510 is specifically configured to:
determine first pre-configured resources for backscattering communication; and
determine candidate backscattering resources for the first UCI based on the first pre-configured resources, where the candidate backscattering resources include the first backscattering resource.

In some embodiments, the determining unit 510 is specifically configured to:
determine at least one resource pattern used by the terminal device, where each resource pattern in the at least one resource pattern is used to indicate a resource for backscattering communication in a time domain resource set; and
determine the first pre-configured resources based on the each resource pattern and a time domain resource set corresponding to the each resource pattern.

In some embodiments, two adjacent time domain resource sets corresponding to the each resource pattern are continuous time domain resource sets in time domain, or a time domain resource set corresponding to the each resource pattern is a periodic time domain resource set in time domain.

In some embodiments, the first pre-configured resources are periodic resources in time domain.

In some embodiments, the determining unit 510 is specifically configured to:
determine backscattering resources after a first moment related to the first UCI in the first pre-configured resource as the candidate backscattering resources.

In some embodiments, the first backscattering resource is a randomly selected backscattering resource in the candidate backscattering resources; or the first backscattering resource is a first one backscattering resource in the candidate backscattering resources.

In some embodiments, the receiving unit 520 is further configured to:
send second resource configuration information to the terminal device.
where the second resource configuration information includes configuration information of at least one pre-configured resource, and the at least one pre-configured resource includes the first pre-configured resource.

In some embodiments, the determining unit 510 is specifically configured to:
in a case where the first UCI includes hybrid automatic repeat request acknowledgment (HARQ) feedback information of at least one physical downlink shared channel (PDSCH), determine a starting time of the first backscattering resource based on a first time length and an ending position of the at least one PDSCH.

In some embodiments, when the determining unit 510 is specifically configured to:
determine a moment after the ending position of the at least one PDSCH and separated from the ending position by the first time length as the starting time of the first backscattering resource; or
determine a moment after a starting position or an ending position of a basic time unit where the ending position of the at least one PDSCH is located and separated from the starting position or the ending position of the basic time unit by the first time length as the starting time of the first backscattering resource; or
determine a starting position of a first one backscattering resource after the ending position of the at least one PDSCH and separated from the ending position by the first time length as the starting time of the first backscattering resource; or
determine a starting position of a first one backscattering resource after a starting position or an ending position of a basic time unit where the ending position of the at least one PDSCH is located and separated from the starting position or the ending position of the basic time unit by the first time length as the starting time of the first backscattering resource.

In some embodiments, a number of the at least one PDSCH is indicated or configured by the network device, or a number of the at least one PDSCH is a preset value.

In some embodiments, a time length of an interval between two adjacent PDSCHs in the at least one PDSCH is less than or equal to the first time length.

In some embodiments, the first time length is indicated or configured by the network device, or the first time length is a preset time length.

In some embodiments, the receiving unit 520 is specifically configured to:
receive, on the first backscattering resource, the first UCI reported by the terminal device to the network device by a manner of backscattering a first signal or a first carrier.

In some embodiments, the first backscattering resource is a downlink resource, and the first signal includes at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the downlink resource is the flexible resource.

In some embodiments, the first backscattering resource is an uplink resource, and the first signal includes at least one of:
an uplink signal sent from the terminal device to the network device;
an uplink signal sent from other terminal devices to the network device;
a sidelink signal sent from other terminal devices;
a signal sent from the terminal device or third-party device on a generated dedicated carrier; and
an uplink signal, a downlink signal or a sidelink signal sent from other terminal devices on a flexible resource in a case where the uplink resource is the flexible resource.

In some embodiments, the first UCI includes at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

In the embodiments of the present disclosure, for a terminal device that supports UCI reporting based on a backscattering mode, a mode for determining a first backscattering resource for reporting first UCI when the first UCI is reported, is proposed, thereby capable of determining the first backscattering resource according to different scenarios, greatly improving reporting performance of the first UCI and further, reducing a reporting delay of the first UCI.

Of course, the present disclosure does not specifically limit an implementation of reporting the first UCI to the network device based on the first backscattering resource under what situations. For example, when a downlink resource accounts for a relatively large proportion, the first UCI can be reported based on a backscattering mode on a downlink time domain resource by a mode of an instruction from the network device, without waiting for an arrival of an uplink time domain resource, thereby capable of greatly reducing a reporting delay of the first UCI. For another example, when the first UCI is reported based on PUCCH/PUSCH channel, reporting of the first UCI is canceled due to channel conflicts or priority problems, and at this time, the first UCI can be reported by backscattering to ensure that the first UCI can be successfully transmitted. For another example, when the time domain resource required for reporting the first UCI based on the backscattering manner is more and the required time domain resource overlaps with the uplink time domain resource, it may be flexibly switched to reporting the first UCI based on the uplink time domain resource, and reporting of the first UCI to the network device based on the backscattering manner may be canceled, thereby capable of reducing a reporting delay of the first UCI. For another example, two UCI reporting modes may be used at the same time to enhance the reporting performance of the first UCI.

Taking into account the typical characteristics of communication based on the backscattering mode, which may perform communication based on a downlink signal, an uplink signal or a dedicated signal (i.e., not limited to the uplink and downlink communication resources in the existing NR system), the present disclosure provides various modes for determining the first backscattering resource. Specifically, the terminal device may determine the first backscattering resource based on at least one of the following information.

Mode 1: the network device sends the first backscattering resource to the terminal device.

Mode 2: the network device pre-configures the first backscattering resource for the terminal device.

Mode 3: when the first UCI includes hybrid automatic repeat request acknowledgement (HARQ) feedback information of at least one physical downlink shared channel (PDSCH), a starting time of the first backscattering resource is determined based on a first time length and an ending position of the at least one PDSCH.

It should be noted that the above-mentioned modes may be used individually or in combination, and the present disclosure does not specifically limit thereto.

It should be understood that the apparatus embodiments and the method embodiments may correspond to each other, and similar descriptions may refer to the method embodiments. Specifically, the network device 500 shown in FIG. 17 may correspond to a corresponding entity for performing the method 300 in the embodiments of the present disclosure, and the aforementioned and other operations and/or functions of respective units in the network device 500 are for implementing the corresponding processes in respective methods provided in the embodiments of the present disclosure, respectively, which will not be repeated herein for the sake of brevity.

The communication device of the embodiments of the present disclosure is described from the perspective of functional modules in combination with the accompanying drawings above. It should be understood that the functional module can be implemented in the form of hardware, can be implemented by instructions in the form of software, or can be implemented by a combination of hardware and software modules. Specifically, respective steps of the method embodiments in the embodiments of the present disclosure can be completed by the hardware-integrated logic circuit and/or software instructions in the processor. The steps in combination with the methods disclosed in the embodiments of the present disclosure can be directly embodied as completion of execution by a hardware decoding processor, or completion of execution by a combination of hardware and software modules in the decoding processor. Optionally, the software module may be located in a mature storage medium in the art, such as a random access memory, a flash memory, a read-only memory, a programmable read-only memory, an electrically erasable programmable memory, a register, etc. The storage medium is located in a memory, and a processor reads information in the memory and completes the steps in the above-mentioned method embodiments in combination with hardware thereof.

For example, the determining unit 410 or the determining unit 510 mentioned above may be implemented by a processor, respectively, and the reporting unit 420 or the receiving unit 520 mentioned above may be implemented by a transceiver.

FIG. 18 is a schematic structural diagram of a communication device 600 of the embodiments of the present disclosure.

As shown in FIG. 18, the communication device 600 includes a processor 610.

The processor 610 may call a computer program from a memory and run the computer program to implement the method in the embodiments of the present disclosure.

As shown in FIG. 18, the communication device 600 may further include a memory 620.

The memory 620 may be used to store indication information, and may further be used to store codes, instructions, etc., executed by the processor 610. The processor 610 may call and run a computer program from the memory 620 to implement the method in the embodiments of the present disclosure. The memory 620 may be a separate device independent from the processor 610, or may be integrated into the processor 610.

As shown in FIG. 18, the communication device 600 may further include a transceiver 630.

The processor 610 may control the transceiver 630 to communicate with other devices, and specifically, may control the transceiver 630 to send information or data to other devices, or receive information or data sent by other devices. The transceiver 630 may include a transmitter and a receiver. The transceiver 630 may further include an antenna, and a number of antennas may be one or more.

It should be understood that the respective components in the communication device 600 are connected via a bus system, where the bus system further includes a power bus, a control bus and a status signal bus in addition to including a data bus.

It should also be understood that the communication device 600 may be the terminal device of the embodiments of the present disclosure, and the communication device 600 may implement corresponding processes implemented by the terminal device in the respective methods of the embodiments of the present disclosure. That is, the communication device 600 of the embodiments of the present disclosure may correspond to the terminal device 400 in the embodiments of the present disclosure, and may correspond to a corresponding entity for performing the method 200 according to the embodiments of the present disclosure, which will not be repeated herein for the sake of brevity. Similarly, the communication device 600 may be the network device in the embodiments of the present disclosure, and the communication device 600 may implement corresponding processes implemented by the network device in the respective methods in the embodiments of the present disclosure. That is, the communication device 600 in the embodiments of the present disclosure may correspond to the network device 600 in the embodiments of the present disclosure, and may correspond to a corresponding entity for performing the method 300 according to the embodiments of the present disclosure, which will not be repeated herein for the sake of brevity.

The embodiments of the present disclosure further provide a chip.

For example, the chip can be an integrated circuit chip with signal processing capabilities, and can implement or execute methods, steps and logic block diagrams disclosed in the embodiments of the present disclosure. The chip may also be referred to as a system-level chip, a system chip, a chip system, or a system-on-chip chip, etc. Optionally, the chip can be applied to various communication devices, so that the communication devices equipped with the chip can execute the respective methods, steps and logic block diagrams disclosed in the embodiments of the present disclosure.

FIG. 19 is a schematic structural diagram of a chip 700 according to the embodiments of the present disclosure.

As shown in FIG. 19, the chip 700 includes a processor 710.

The processor 710 may call a computer program from a memory and run the computer program to implement the methods in the embodiments of the present disclosure.

As shown in FIG. 19, the chip 700 may further include a memory 720.

The processor 710 may call and run a computer program from the memory 720 to implement the methods in the embodiments of the present disclosure. The memory 720 may be used to store indication information, and may also be used to store codes, instructions, etc. executed by the processor 710. The memory 720 may be a separate device independent from the processor 710, or may be integrated into the processor 710.

As shown in FIG. 19, the chip 700 may further include an input interface 730.

The processor 710 may control the input interface 730 to communicate with other devices or chips, and specifically, may control the input interface 730 to obtain information or data sent by other devices or chips.

As shown in FIG. 19, the chip 700 may further include an output interface 740.

The processor 710 may control the output interface 740 to communicate with other devices or chips, and specifically, may control the output interface 740 to output information or data to other devices or chips.

It should be understood that the chip 700 may be applied to the network device in the embodiments of the present disclosure, and the chip may implement corresponding processes implemented by the network device in the respective methods of the embodiments of the present disclosure, and may also implement corresponding processes implemented by the terminal device in the respective methods of the embodiments of the present disclosure, which will not be repeated herein for the sake of brevity.

It should also be understood that respective components in the chip 700 are connected via a bus system, where the bus system further includes a power bus, a control bus and a status signal bus in addition to including a data bus.

The processors mentioned above may include but are not limited to:
a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, discrete gates or transistor logic devices, discrete hardware components, etc.

The processor can be used to implement or perform methods, steps and logic block diagrams disclosed in the embodiments of the present disclosure. The steps of the method disclosed in combination with the embodiments of the present disclosure can be directly embodied as completing of execution by a hardware decoding processor, or completing of execution by a combination of hardware and software modules in the decoding processor. The software module may be located in mature storage medium in the art, such as a random access memory, a flash memory, a read-only memory, a programmable read-only memory or an erasable programmable memory, a register, etc. The storage medium is located in the memory, and the processor reads the information in the memory and completes the steps of the above method in combination with hardware thereof.

The memory mentioned above includes but is not limited to:
a volatile memory and/or a non-volatile memory. The non-volatile memory can be a read-only memory (Read-Only Memory, ROM), a programmable ROM (Programmable ROM, PROM), an erasable programmable read-only memory (Erasable PROM, EPROM), an electrically erasable programmable read-only memory (Electrically EPROM, EEPROM), or a flash memory. Volatile memory can be a Random access memory (Random Access Memory, RAM), which acts as external cache memory. By way of example and not a limitation, many forms of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synchronous link DRAM (synch link DRAM, SLDRAM), and direct memory bus random access memory (Direct Rambus RAM, DR RAM).

It should be noted that the memories described herein are intended to include these and any other suitable types of memories.

In the embodiments of the present disclosure, a computer-readable storage medium is also provided for storing a computer program. The computer-readable storage medium stores one or more programs, which include instructions. The instructions, upon being executed by a portable electronic device including multiple application programs, enable the portable electronic device to perform the UCI reporting method provided in the present disclosure. Optionally, the computer-readable storage medium can be applied to the network device in the embodiments of the present disclosure, and the computer program enables a computer to execute corresponding processes implemented by the network device in the respective methods of the embodiments of the present disclosure, which will not be repeated herein for the sake of brevity. Optionally, the computer-readable storage medium can be applied to the mobile terminal/terminal device in the embodiments of the present disclosure, and the computer program enables a computer to execute corresponding processes implemented by the mobile terminal/terminal device in the respective methods of the embodiments of the present disclosure, which will not be repeated herein for the sake of brevity.

In the embodiments of the present disclosure, a computer program product is also provided, and the computer program product includes a computer program. Optionally, the computer program product can be applied to the network device in the embodiments of the present disclosure, and the computer program enables a computer to execute corresponding processes implemented by the network device in the respective methods of the embodiments of the present disclosure, which will not be repeated herein for the sake of brevity. Optionally, the computer program product can be applied to the mobile terminal/terminal device in the embodiments of the present disclosure, and the computer program enables a computer to execute corresponding processes implemented by the mobile terminal/terminal device in the respective methods of the embodiments of the present disclosure, which will not be repeated herein for the sake of brevity.

In the embodiments of the present disclosure, a computer program is also provided. The computer program, upon being executed by a computer, enables the computer to perform the UCI reporting method provided in the present disclosure. Optionally, the computer program can be applied to the network device in the embodiments of the present disclosure. The computer program, upon being executed on the computer, enables the computer to execute corresponding processes implemented by the network device in the respective methods of the embodiments of the present disclosure, which will not be repeated herein for the sake of brevity. Optionally, the computer program can be applied to the mobile terminal/terminal device in the embodiments of the present disclosure. The computer program, upon being executed on a computer, enables the computer to execute corresponding processes implemented by the mobile terminal/terminal device in the respective methods of the embodiments of the present disclosure, which will not be repeated herein for the sake of brevity.

The embodiments of the present disclosure also provide a communication system, and the communication system may include the terminal device and the network device mentioned above, to form the communication system 100 as shown in FIG. 1, which will not be repeated herein for the sake of brevity. It should be noted that the term "system" herein can also be referred to as "network management architecture" or "network system", etc.

It should also be understood that the terms used in the embodiments of the present disclosure and the appended claims are for the purpose of describing specific embodiments only and are not intended to limit the embodiments of the present disclosure. For example, as used in the embodiments of the present disclosure and the appended claims, the singular forms "a," "said," "above-mentioned," and "the" are intended to include the plural forms as well, unless the context clearly indicated otherwise.

Those skilled in the art may realize that the units and algorithm steps of respective examples described in combination with the disclosed embodiments can be implemented in an electronic hardware, or a combination of a computer software and an electronic hardware. Whether these functions are executed in hardware or software depends on the specific application and design constraints of the technical solution. Professional technicians may use different methods to achieve the described functions for each specific application, but such implementation should not be considered beyond the scope of the embodiments of the present disclosure. If implemented in the form of software functional units and sold or used as independent products, it can be stored in a computer-readable storage medium. Based on this understanding, the technical solution of the embodiments of the present disclosure essentially or the portion that contributes to the existing technology or the portion of the technical solution can be reflected in the form of a software product, which is stored in a storage medium and includes several instructions to enable a computer device (which can be a personal computer, a server, or a network device, etc.) to perform all or part of the steps of the method described in the embodiments of the present disclosure. The aforementioned storage medium includes various media that can store program codes, such as a U disk, a portable hard disk, a read-only memory, a random access memory, a magnetic disk, or an optical disk, etc.

Those skilled in the art may also realize that for the convenience and brevity of the description, the specific working processes of the system, device, and unit described above can refer to the corresponding processes in the aforementioned method embodiments, which will not be repeated herein. In the several embodiments provided in the present disclosure, it should be understood that the disclosed systems, devices, and methods can be implemented in other ways. For example, the division of units, modules, or components in the apparatus embodiments described above is only a logical functional division. In an actual implementation, there may be other division methods, for example, multiple units, modules, or components can be combined or integrated into another system, or some units, modules, or components can be ignored or not executed. For another example, the units/modules/components mentioned above as separate/display components may or may not be physically separated, that is, can be located in one place or distributed across multiple network units. Some or all units/modules/components can be selected according to actual needs to achieve the purpose of the embodiments of the present disclosure. Finally, it should be noted that the coupling or direct coupling or communication connection between each other shown or discussed above can be indirect coupling or communication connection through some interfaces, apparatuses or units, and can be in the form of electrical, mechanical or other forms.

The above content is only the specific implementation of the embodiments of the present disclosure, but the protection scope of the embodiments of the present disclosure is not limited to thereto. Any technical personnel familiar with the technical field within the technical scope disclosed in the present embodiment can easily conceive changes or replacements, which should be covered within the protection scope of the embodiments of the present disclosure. Therefore, the scope of protection of the embodiments of the present disclosure shall be based on the protection scope of the claims.

## Claims

1. A UCI reporting method, wherein the method is applied to a terminal device, and the method comprises:
determining a first backscattering resource for reporting first uplink control information (UCI); and
reporting the first UCI to a network device based on the first backscattering resource.

2. The method according to claim 1, wherein the method further comprises:
receiving first indication information sent from the network device, wherein the first indication information is used to indicate the first backscattering resource.

3. The method according to claim 2, wherein the first indication information is used to indicate at least one of: a starting time of the first backscattering resource, a duration of the first backscattering resource, and a frequency domain position of the first backscattering resource.

4. The method according to claim 2 or 3, wherein the first indication information indicates, through a first resource configuration index, at least one of: a starting time of the first backscattering resource, a duration of the first backscattering resource, and a frequency domain position of the first backscattering resource.

5. The method according to claim 4, wherein the method further comprises:
receiving first resource configuration information sent from the network device;
wherein the first resource configuration information comprises at least one of: a correspondence between at least one resource configuration index and at least one starting time, a correspondence between the at least one resource configuration index and at least one duration, and a correspondence between the at least one resource configuration index and a frequency domain position of at least one backscattering resource; wherein the at least one resource configuration index comprises the first resource configuration index.

6. The method according to any one of claims 2 to 5, wherein the first indication information indicates a starting time of the first backscattering resource through a first offset value and a second offset value; wherein the first offset value is used to indicate a time reference point of the first backscattering resource, and the second offset value is used to indicate an offset value of the starting time of the first backscattering resource relative to the time reference point.

7. The method according to claim 6, wherein a time length of a basic time unit adopted by the first offset value is greater than a time length of a basic time unit adopted by the second offset value.

8. The method according to any one of claims 2 to 7, wherein the first indication information is carried in at least one of:
downlink control information (DCI), a higher-layer signaling, and dedicated control information for backscattering communication.

9. The method according to claim 1, wherein the determining the first backscattering resource for reporting the first uplink control information (UCI) comprises:
determining first pre-configured resources for backscattering communication;
determining candidate backscattering resources for the first UCI based on the first pre-configured resources; and
determining the first backscattering resource based on the candidate backscattering resources.

10. The method according to claim 9, wherein the determining the first pre-configured resources for backscattering communication comprises:
determining at least one resource pattern used by the terminal device, wherein each resource pattern in the at least one resource pattern is used to indicate a resource for backscattering communication in a time domain resource set; and
determining the first pre-configured resources based on the each resource pattern and a time domain resource set corresponding to the each resource pattern.

11. The method according to claim 10, wherein two adjacent time domain resource sets corresponding to the each resource pattern are continuous time domain resource sets in time domain, or a time domain resource set corresponding to the each resource pattern is a periodic time domain resource set in time domain.

12. The method according to any one of claims 9 to 11, wherein the first pre-configured resources are periodic resources in time domain.

13. The method according to any one of claims 9 to 12, wherein the determining the candidate backscattering resources for the first UCI based on the first pre-configured resources comprises:
determining backscattering resources after a first moment related to the first UCI in the first pre-configured resources as the candidate backscattering resources.

14. The method according to any one of claims 9 to 13, wherein the determining the first backscattering resource based on the candidate backscattering resources comprises:
determining a backscattering resource randomly selected from the candidate backscattering resources as the first backscattering resource; or
determining a first one backscattering resource in the candidate backscattering resources as the first backscattering resource.

15. The method according to any one of claims 9 to 14, wherein the method further comprises:
receiving second resource configuration information sent from the network device;
wherein the second resource configuration information comprises configuration information of at least one pre-configured resource, and the at least one pre-configured resource comprises the first pre-configured resources.

16. The method according to any one of claims 1 to 15, wherein the determining the first backscattering resource for reporting the first uplink control information (UCI) comprises:
in a case where the first UCI comprises hybrid automatic repeat request acknowledgment (HARQ) feedback information of at least one physical downlink shared channel (PDSCH), determining a starting time of the first backscattering resource based on a first time length and an ending position of the at least one PDSCH.

17. The method according to claim 16, wherein the determining the starting time of the first backscattering resource based on the first time length and the ending position of the at least one PDSCH comprises:
determining a moment after the ending position of the at least one PDSCH and separated from the ending position by the first time length as the starting time of the first backscattering resource; or
determining a moment after a starting position or an ending position of a basic time unit where the ending position of the at least one PDSCH is located and separated from the starting position or the ending position of the basic time unit by the first time length as the starting time of the first backscattering resource; or
determining a starting position of a first one backscattering resource after the ending position of the at least one PDSCH and separated from the ending position by the first time length as the starting time of the first backscattering resource; or
determining a starting position of a first one backscattering resource after a starting position or an ending position of a basic time unit where the ending position of the at least one PDSCH is located and separated from the starting position or the ending position of the basic time unit by the first time length as the starting time of the first backscattering resource.

18. The method according to claim 16 or 17, wherein a number of the at least one PDSCH is indicated or configured by the network device, or a number of the at least one PDSCH is a preset value.

19. The method according to claim 16 or 17, wherein a time length of an interval between two adjacent PDSCHs in the at least one PDSCH is less than or equal to the first time length.

20. The method according to any one of claims 16 to 19, wherein the first time length is indicated or configured by the network device, or the first time length is a preset time length.

21. The method according to any one of claims 1 to 20, wherein the reporting the first UCI to the network device based on the first backscattering resource comprises:
reporting, on the first backscattering resource, the first UCI to the network device by a manner of backscattering a first signal or a first carrier.

22. The method according to claim 21, wherein the first backscattering resource is a downlink resource, and the first signal comprises at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the downlink resource is the flexible resource.

23. The method according to claim 21, wherein the first backscattering resource is an uplink resource, and the first signal comprises at least one of:
an uplink signal sent from the terminal device to the network device;
an uplink signal sent from other terminal devices to the network device;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the uplink resource is the flexible resource.

24. The method according to any one of claims 1 to 23, wherein the first UCI comprises at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

25. A UCI reporting method, wherein the method is applied to a network device, and the method comprises:
determining a first backscattering resource for reporting first uplink control information (UCI); and
receiving the first UCI reported by a terminal device based on the first backscattering resource.

26. The method according to claim 25, wherein the method further comprises:
sending first indication information to the terminal device, wherein the first indication information is used to indicate the first backscattering resource.

27. The method according to claim 26, wherein the first indication information is used to indicate at least one of: a starting time of the first backscattering resource, a duration of the first backscattering resource, and a frequency domain position of the first backscattering resource.

28. The method according to claim 26 or 27, wherein the first indication information indicates, through a first resource configuration index, at least one of: a starting time of the first backscattering resource, a duration of the first backscattering resource, and a frequency domain position of the first backscattering resource.

29. The method according to claim 28, wherein the method further comprises:
sending first resource configuration information to the terminal device;
wherein the first resource configuration information comprises at least one of: a correspondence between at least one resource configuration index and at least one starting time, a correspondence between the at least one resource configuration index and at least one duration, and a correspondence between the at least one resource configuration index and a frequency domain position of at least one backscattering resource; and the at least one resource configuration index comprises the first resource configuration index.

30. The method according to any one of claims 26 to 29, wherein the first indication information indicates a starting time of the first backscattering resource through a first offset value and a second offset value, wherein the first offset value is used to indicate a time reference point of the first backscattering resource, and the second offset value is used to indicate an offset value of the starting time of the first backscattering resource relative to the time reference point.

31. The method according to claim 30, wherein a time length of a basic time unit adopted by the first offset value is greater than a time length of a basic time unit adopted by the second offset value.

32. The method according to any one of claims 26 to 31, wherein the first indication information is carried in at least one of:
downlink control information (DCI), a higher-layer signaling, and dedicated control information for backscattering communication.

33. The method according to claim 25, wherein the determining the first backscattering resource for reporting the first uplink control information (UCI) comprises:
determining first pre-configured resources for backscattering communication; and
determining candidate backscattering resources for the first UCI based on the first pre-configured resources, wherein the candidate backscattering resources comprise the first backscattering resource.

34. The method according to claim 33, wherein the determining the first pre-configured resources for backscattering communication comprises:
determining at least one resource pattern used by the terminal device, wherein each resource pattern in the at least one resource pattern is used to indicate a resource for backscattering communication in a time domain resource set; and
determining the first pre-configured resources based on the each resource pattern and a time domain resource set corresponding to the each resource pattern.

35. The method according to claim 34, wherein two adjacent time domain resource sets corresponding to the each resource pattern are continuous time domain resource sets in time domain, or a time domain resource set corresponding to the each resource pattern is a periodic time domain resource set in time domain.

36. The method according to any one of claims 33 to 35, wherein the first pre-configured resources are periodic resources in time domain.

37. The method according to any one of claims 33 to 36, wherein the determining the candidate backscattering resources for the first UCI based on the first pre-configured resources comprises:
determining backscattering resources after a first moment related to the first UCI in the first pre-configured resources as the candidate backscattering resources.

38. The method according to any one of claims 33 to 37, wherein the first backscattering resource is a backscattering resource randomly selected from the candidate backscattering resources; or the first backscattering resource is a first one backscattering resource in the candidate backscattering resources.

39. The method according to any one of claims 33 to 38, wherein the method further comprises:
sending second resource configuration information to the terminal device;
wherein the second resource configuration information comprises configuration information of at least one pre-configured resource, and the at least one pre-configured resource comprises the first pre-configured resources.

40. The method according to any one of claims 25 to 39, wherein the determining the first backscattering resource for reporting the first uplink control information (UCI) comprises:
in a case where the first UCI comprises hybrid automatic repeat request acknowledgment (HARQ) feedback information of at least one physical downlink shared channel (PDSCH), determining a starting time of the first backscattering resource based on a first time length and an ending position of the at least one PDSCH.

41. The method according to claim 40, wherein the determining the starting time of the first backscattering resource based on the first time length and the ending position of the at least one PDSCH comprises:
determining a moment after the ending position of the at least one PDSCH and separated from the ending position by the first time length as the starting time of the first backscattering resource; or
determine a moment after a starting position or an ending position of a basic time unit where the ending position of the at least one PDSCH is located and separated from the starting position or the ending position of the basic time unit by the first time length as the starting time of the first backscattering resource; or
determining a starting position of a first one backscattering resource after the ending position of the at least one PDSCH and separated from the ending position by the first time length as the starting time of the first backscattering resource; or
determining a starting position of a first one backscattering resource after a starting position or an ending position of a basic time unit where the ending position of the at least one PDSCH is located and separated from the starting position or the ending position of the basic time unit by the first backscattering resource as the starting time of the first backscattering resource.

42. The method according to claim 40 or 41, wherein a number of the at least one PDSCH is indicated or configured by the network device, or a number of the at least one PDSCH is a preset value.

43. The method according to claim 40 or 41, wherein a time length of an interval between two adjacent PDSCHs in the at least one PDSCH is less than or equal to the first time length.

44. The method according to any one of claims 40 to 43, wherein the first time length is indicated or configured by the network device, or the first time length is a preset time length.

45. The method according to any one of claims 25 to 44, wherein the receiving the first UCI reported by the terminal device based on the first backscattering resource, comprises:
receiving, on the first backscattering resource, the first UCI reported by the terminal device to the network device by a manner of backscattering a first signal or a first carrier.

46. The method according to claim 45, wherein the first backscattering resource is a downlink resource, and the first signal comprises at least one of:
a downlink signal sent from the network device to the terminal device;
a downlink signal sent from the network device to other terminal devices;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the downlink resource is the flexible resource.

47. The method according to claim 45, wherein the first backscattering resource is an uplink resource, and the first signal comprises at least one of:
an uplink signal sent from the terminal device to the network device;
an uplink signal sent from other terminal devices to the network device;
a sidelink signal sent from other terminal devices;
a signal sent from the terminal device or a third-party device on a generated dedicated carrier; and
an uplink signal, a downlink signal or a sidelink signal sent from other terminal devices on a flexible resource in a case where the uplink resource is the flexible resource.

48. The method according to any one of claims 25 to 47, wherein the first UCI comprises at least one of: hybrid automatic repeat request acknowledgement (HARQ-ACK) information, HARQ non-acknowledgement (NACK) information, a scheduling request (SR), a link recovery request (LRR), channel state information (CSI), and a radio resource control (RRC) reconfiguration signaling.

49. A terminal device, comprising:
a determining unit, configured to determine a first backscattering resource for reporting first uplink control information (UCI); and
a reporting unit, configured to report the first UCI to a network device based on the first backscattering resource.

50. A network device, comprising:
a determining unit, configured to determine a first backscattering resource for reporting first uplink control information (UCI); and
a receiving unit, configured to receive the first UCI reported from a terminal device based on the first backscattering resource.

51. A terminal device, comprising:
a processor and a memory, wherein the memory is configured to store a computer program, and the processor is configured to call the computer program stored in the memory and run the computer program to perform the method according to any one of claims 1 to 24.

52. A network device, comprising:
a processor and a memory, wherein the memory is configured to store a computer program, and the processor is configured to call the computer program stored in the memory and run the computer program to perform the method according to any one of claims 25 to 48.

53. A chip, comprising:
a processor, configured to call a computer program from a memory and run the computer program, so as to enable a device equipped with the chip to perform the method according to any one of claims 1 to 24 or the method according to any one of claims 25 to 48.

54. A computer-readable storage medium, wherein the computer-readable storage medium is used to store a computer program, and the computer program enables a computer to perform the method according to any one of claims 1 to 24 or the method according to any one of claims 25 to 48.

55. A computer program product, wherein the computer program product comprises computer program instructions, and the computer program instructions enable a computer to perform the method according to any one of claims 1 to 24 or the method according to any one of claims 25 to 48.

56. A computer program, wherein the computer program enables a computer to perform the method according to any one of claims 1 to 24 or the method according to any one of claims 25 to 48.
